# FASCICULE DE BREVET EUROPEEN

(11) **EP 3 111 491 B1**
(45) Date de publication et mention de la délivrance du brevet: **31.01.2018**
(21) Numéro de dépôt: 15707079.8
(22) Date de dépôt: 24.02.2015
(51) Int. Cl.: H01M 2/02, H01M 2/10, H01M 2/20, H01M 2/26, H01M 2/30, H01M 6/42, H01M 10/04

(54) **CELLULE DE STOCKAGE D'ÉNERGIE ÉLECTRIQUE COMPORTANT AU MOINS UN ÉLÉMENT MÂLE ET UN ÉLÉMENT FEMELLE, MUNIS D'INTERFACES DE CONNEXION ÉLECTRIQUE**
ZELLE ZUM SPEICHERN VON ENERGIE MIT MINDESTENS EINEM STECKERELEMENT UND EINEM BUCHSENELEMENT MIT ELEKTRISCHEN VERBINDUNGSSCHNITTSTELLEN
CELL FOR STORING POWER, COMPRISING AT LEAST ONE MALE ELEMENT AND ONE FEMALE ELEMENT EQUIPPED WITH ELECTRICAL CONNECTION INTERFACES

(30) Priorité: 26.02.2014 FR 1451546
(43) Date de publication de la demande: 04.01.2017
(73) Titulaire: Commissariat à l'Énergie Atomique et aux Énergies Alternatives, 75015 Paris (FR)
(72) Inventeur: BERTHE DE POMMERY, Yves, 54380 Dieulouard (FR); AZAIS, Philippe, 38120 Saint Égrève (FR); PICARD, Lionel, 38170 Seyssinet-Pariset (FR); TURIN, Guillaume, 59000 Lille (FR)
(74) Mandataire: Brevalex
(86) Numéro de dépôt international: PCT/EP2015/053782
(87) Numéro de publication internationale: WO 2015/128305

(56) Documents cités:
- EP-A1- 2 565 961
- DE-A1-102005 042 169
- JP-A- H1 064 492
- JP-A- H07 142 039
- JP-A- 2010 080 411
- JP-A- 2010 232 102
- US-A1- 2013 071 725

## Description

### DOMAINE TECHNIQUE

La présente invention se rapporte au domaine des cellules de stockage d'énergie électrique, et notamment au domaine des cellules électrochimiques élémentaires. De telles cellules sont destinées à être assemblées au sein de modules eux-mêmes assemblés entre eux pour former un système de stockage d'énergie, par exemple un pack batterie. Plus particulièrement, l'invention concerne le domaine des systèmes d'assemblage et de connexion électrique intégrés à de telles cellules de stockage d'énergie électrique.

L'invention s'applique préférentiellement aux cellules électrochimiques élémentaires qui forment des générateurs électrochimiques. Toutefois, elle peut également concerner les condensateurs et les supercondensateurs électrochimiques ou diélectriques, par exemple.

Elle trouve des applications dans de nombreux domaines de l'industrie, notamment pour des applications stationnaires ou embarquées, en particulier pour le domaine de l'alimentation électrique des véhicules de transport, terrestres, aériens et/ou nautiques, par exemple pour l'alimentation électrique des véhicules hybrides et/ou électriques pour lesquels un agencement d'un grand nombre de cellules de stockage d'énergie électrique est requis.

Parmi les cellules électrochimiques élémentaires, trois principaux types de géométrie d'architecture sont couramment utilisés. Ainsi, de façon classique et connue en soi, les cellules peuvent présenter une géométrie cylindrique, une géométrie prismatique ou une géométrie en sachet/empilement (appelée encore « pouch-cell » en anglais).

De façon préférentielle, l'invention peut s'appliquer à des cellules électrochimiques élémentaires de géométrie prismatique bien qu'elle puisse également être concernée par d'autres types de géométrie des cellules électrochimiques.

Elle propose ainsi une cellule de stockage d'énergie électrique comportant des éléments mâle et femelle pour l'assemblage et la connexion électrique de la cellule, un module électrique d'assemblage comportant une pluralité de telles cellules, un système de stockage d'énergie comportant une pluralité de tels modules d'assemblage, ainsi qu'un procédé de fabrication d'une telle cellule de stockage d'énergie électrique.

### ÉTAT DE LA TECHNIQUE ANTÉRIEURE

Les accumulateurs sont des systèmes permettant de stocker de l'énergie électrique sous forme chimique. Ils sont basés sur un système électrochimique réversible, c'est-à-dire rechargeable. Cependant, toutes les propositions énoncées ci-après restent valables pour des systèmes primaires (non rechargeables), sauf mention contraire.

Le système de stockage d'énergie électrochimique est un assemblage de modules électrochimiques, eux-mêmes assemblages de cellules électrochimiques élémentaires qui constituent des accumulateurs. Au sein du système de stockage d'énergie, les cellules électrochimiques sont reliées et gérées par une électronique de contrôle, encore appelée électronique BMS pour « Battery Management System » en anglais, qui permet d'optimiser la charge et la décharge et de prolonger la durée de vie.

Les accumulateurs ou cellules contiennent des réactifs chimiques qui, une fois activés, permettent de fournir de l'électricité à la demande. Ces réactions électrochimiques sont activées au sein de la cellule électrochimique élémentaire, entre une électrode positive et une électrode négative baignant dans un électrolyte, lorsqu'une charge électrique est branchée aux bornes de la cellule. A titre d'exemple, la technologie Li-ion consiste à utiliser la circulation électrochimique de l'ion lithium dans deux matériaux et à des valeurs de potentiel différentes : l'électrode positive et l'électrode négative constituent les deux potentiels d'oxydoréduction, et la différence de potentiel crée la tension au sein de la batterie. En cours d'utilisation (l'accumulateur se décharge), l'électrode négative relâche le lithium sous forme ionique Li⁺. Les ions Li⁺ migrent alors vers l'électrode positive, via l'électrolyte conducteur ionique. Le passage de chaque ion Li⁺ au sein de l'accumulateur est compensé par le passage d'un électron dans le circuit externe (courant circulant à partir des bornes de l'accumulateur), en sens inverse, créant ainsi le courant électrique permettant de faire fonctionner le dispositif associé à la batterie. Il y a alors du courant électrique jusqu'à ce qu'il n'y ait plus de lithium au sein de l'électrode négative : l'accumulateur est alors déchargé et son rechargement se fait selon le processus inverse.

Afin de pouvoir assembler et connecter les cellules entre elles, que ce soient des cellules électrochimiques élémentaires comme présentées ci-dessus ou des cellules de stockage d'énergie électrique de façon plus générale, il est prévu sur celles-ci des systèmes de connexion électrique.

Actuellement, les systèmes de connexion électrique utilisés sont classiquement réalisés par une pièce conductrice extérieure, typiquement une patte de connexion rapportée reliant les cellules entre elles, et deux bornes électriques apparentes positive et négative, situées soit sur une même face (cas des batteries de véhicule automobile par exemple), soit sur des faces opposées.

Ces types de systèmes de connexion électrique s'avèrent toutefois ne pas être satisfaisants du fait de leur dangerosité, notamment dans le domaine des éléments de puissance, à la fois pour les opérateurs et pour la cellule de stockage elle-même. En effet, la pièce conductrice extérieure et les bornes apparentes augmentent les risques de court-circuit.

Des solutions ont été proposées dans l'art antérieur pour tenter de limiter ces inconvénients. Ainsi, la demande de brevet US 2012/0058382 A1 propose un système de connectiques rapportées pour éviter les chocs électriques, au montage et après montage, et pour permettre de déconnecter les cellules en cas d'accident. La demande de brevet US 2013/0029201 A1 décrit une mise en module de cellules fines avec un seul connecteur externe pour chaque pôle des cellules. Ce connecteur, en réduisant le nombre total de pièces, a pour but de limiter les risques de court-circuit.

Par ailleurs, des solutions ont été décrites pour réaliser le conditionnement des cellules de stockage par application d'un revêtement (ou « packaging » en anglais), par exemple par vissage, collage, surmoulage et/ou déformation. La demande de brevet JP 2011-119122 A utilise par exemple le surmoulage pour injecter un revêtement final autour de la cellule et de ses bornes. Le brevet US 7,252,903 B2 décrit également l'utilisation du surmoulage pour assembler plusieurs parties de la cellule entre elles, dont des éléments de sécurité, tout en donnant la forme finale à la partie supérieure de la cellule. Enfin, la demande de brevet US 2012/0148907 A1 propose de surmouler le couvercle de la cellule sur les bornes pour réduire le risque de fuites.

La demande de brevet JP 2010-232102 décrit une cellule électrochimique qui comporte sur une de ses faces plusieurs éléments mâles, et sur une face opposée à cette première face plusieurs éléments femelles. Les éléments mâles et les éléments femelles comportent une interface de connexion électrique.

La demande de brevet US 2013/071725 décrit un procédé de surmoulage sur le coeur électrique et les deux zones de contact électrique positive et négative d'une cellule électrochimique par un revêtement, de sorte à recouvrir partiellement le coeur pour former les interfaces de connexion électrique. Néanmoins, dans la plupart de ces solutions de l'art antérieur, on retrouve des cellules de stockage d'énergie électrique réalisées avec un revêtement conducteur, typiquement en aluminium, en contact avec l'une des bornes de la cellule, et toujours des connectiques de cellule apparentes d'un même côté ou d'un côté et de l'autre de la cellule. Or, comme indiqué précédemment, ce type de cellule occasionne des risques élevés pour la santé de l'opérateur et le bon fonctionnement de la cellule, notamment dans le cas d'une cellule à haute énergie. Les risques pour l'opérateur sont de nature électrique et provoqués par la possibilité de pouvoir toucher les deux bornes ou des pièces conductrices en contact avec les bornes. De plus, les risques pour la cellule sont d'obtenir une mise en court-circuit des deux bornes qui peut entraîner la dégradation ou un échauffement important de la cellule.

### EXPOSÉ DE L'INVENTION

L'invention a ainsi pour but de remédier au moins partiellement aux besoins mentionnés ci-dessus et aux inconvénients relatifs aux réalisations de l'art antérieur.

L'invention vise notamment à proposer un nouveau type de cellule de stockage d'énergie électrique comportant un système de connexion sécuritaire et non court-circuitable.

L'invention a ainsi pour objet, selon l'un de ses aspects, une cellule de stockage d'énergie électrique, destinée à être intégrée au sein d'un module électrique d'assemblage d'un système de stockage d'énergie, présentant une première face et une deuxième face, opposée à la première face,
caractérisée en ce que la cellule comporte, sur l'une de ses première et deuxième faces, au moins un élément mâle, et sur l'autre de ses première et deuxième faces, au moins un élément femelle, lesdits au moins un élément mâle et au moins un élément femelle présentant des formes permettant leur encastrement l'un dans l'autre de façon à ce que la cellule soit configurée pour être assemblée à une autre cellule du même type, ledit au moins un élément mâle ou ledit au moins un élément femelle de la cellule étant respectivement encastré avec au moins un élément femelle ou au moins un élément mâle de l'autre cellule du même type,
et en ce qu'au moins un élément mâle desdits au moins un élément mâle et au moins un élément femelle comporte au moins une interface de connexion électrique de polarité positive et qu'au moins un élément femelle desdits au moins un élément mâle et au moins un élément femelle comporte au moins une interface de connexion électrique de polarité négative, ou inversement, de façon à ce que la cellule soit configurée pour être électriquement connectée à une autre cellule du même type.

Grâce à l'invention, il est possible de réaliser un assemblage simple et sécuritaire de plusieurs cellules de stockage d'énergie électrique conformes à l'invention au sein d'un module électrique d'assemblage d'un système de stockage d'énergie, par l'intermédiaire des éléments mâles et femelles qui s'emboîtent l'un dans l'autre. Les interfaces de connexion étant situées sur les éléments mâles et femelles, elles peuvent être difficilement accessibles, voire inaccessibles, par l'environnement extérieur, et notamment par un opérateur, ce qui permet avantageusement de supprimer les risques, en particulier de court-circuit.

La cellule de stockage d'énergie électrique selon l'invention peut en outre comporter l'une ou plusieurs des caractéristiques suivantes prises isolément ou suivant toutes combinaisons techniques possibles.

Les première et deuxième faces opposées de la cellule peuvent être constituées par les faces supérieure et inférieure de la cellule, voire encore par deux faces latérales opposées de la cellule.

Lesdits au moins un élément mâle et un élément femelle de la cellule présentent avantageusement des formes complémentaires, permettant ainsi leur encastrement l'un dans l'autre pour l'assemblage de la cellule avec une autre cellule du même type.

Lesdites au moins une interface de connexion électrique de polarité positive et une interface de connexion électrique de polarité négative sont préférentiellement formées sur des parties desdits au moins un élément mâle et un élément femelle leur permettant d'être masquées lors de l'assemblage de la cellule avec une autre cellule du même type.

La cellule est préférentiellement de géométrie prismatique.

La cellule peut préférentiellement être une cellule électrochimique élémentaire, comportant une électrode négative, une électrode positive, et un électrolyte situé entre l'électrode négative et l'électrode positive.

Ladite au moins une interface de connexion électrique de polarité positive et ladite au moins une interface de connexion électrique de polarité négative peuvent être respectivement formées sur une partie d'accessibilité réduite ou nulle dudit au moins un élément mâle et sur une partie d'accessibilité réduite ou nulle dudit au moins un élément femelle, ou inversement, notamment la partie d'accessibilité réduite ou nulle dudit au moins un élément mâle correspondant à une partie destinée à être recouverte par au moins un élément femelle d'une autre cellule du même type lors de l'assemblage par encastrement de la cellule avec l'autre cellule du même type, et la partie d'accessibilité réduite ou nulle dudit au moins un élément femelle correspondant à une partie destinée à être recouverte par au moins un élément mâle d'une autre cellule du même type lors de l'assemblage par encastrement de la cellule avec l'autre cellule du même type.

Les interfaces de connexion électrique, respectivement dudit au moins un élément mâle et dudit au moins un élément femelle, peuvent être formées sur des parties latérales, notamment internes, respectivement desdits au moins un élément mâle et un élément femelle.

Ledit au moins un élément mâle peut s'étendre d'un bord à l'autre de ladite une des première et deuxième faces de la cellule. Ledit au moins un élément femelle peut s'étendre d'un bord à l'autre de ladite autre des première et deuxième faces de la cellule.

Ledit au moins un élément mâle peut présenter une forme de rainure en relief. Ledit au moins un élément femelle peut présenter une forme de rainure en creux. Les formes de rainure en relief et en creux sont avantageusement complémentaires l'une de l'autre pour permettre l'assemblage de la cellule avec une autre cellule du même type.

Ladite une des première et deuxième faces de la cellule peut comporter au moins un tenon, notamment deux tenons de part et d'autre dudit au moins un élément mâle, pour permettre l'assemblage et la connexion sécuritaire dudit au moins un élément mâle avec au moins un élément femelle d'une autre cellule du même type.

Ledit au moins un élément mâle et ledit au moins un élément femelle peuvent présenter des formes similaires, l'assemblage de la cellule avec une autre cellule du même type étant rendu possible par une orientation opposée dudit au moins un élément mâle et dudit au moins un élément femelle de la cellule respectivement par rapport à au moins un élément femelle et au moins un élément mâle de l'autre cellule du même type, lors de l'encastrement.

Il est à noter que, dans la présente description, les termes « similaire » et « semblable » doivent se comprendre comme signifiant « complémentaire ».

Ladite au moins une interface de connexion électrique de polarité positive peut s'étendre partiellement sur ledit au moins un élément mâle, notamment à proximité d'un bord de ladite une des première et deuxième faces de la cellule. Ladite au moins une interface de connexion électrique de polarité négative peut s'étendre partiellement sur ledit au moins un élément femelle, notamment à proximité d'un bord de ladite autre des première et deuxième faces de la cellule, ou inversement.

Ledit au moins un élément mâle peut s'étendre longitudinalement, i.e. selon la plus grande dimension, sur ladite une des première et deuxième faces de la cellule. Ledit au moins un élément femelle peut s'étendre longitudinalement, i.e. selon la plus grande dimension, sur ladite autre des première et deuxième faces de la cellule.

Ledit au moins un élément mâle peut s'étendre transversalement, i.e. selon la plus petite dimension, sur ladite une des première et deuxième faces de la cellule. Ledit au moins un élément femelle peut s'étendre transversalement, i.e. selon la plus petite dimension, sur ladite autre des première et deuxième faces de la cellule.

La cellule peut comporter un coeur électrique, notamment un coeur électrochimique comportant une électrode négative, une électrode positive et un électrolyte situé entre l'électrode négative et l'électrode positive, recouvert par un revêtement configuré de sorte à ne pas recouvrir lesdites au moins une interface de connexion électrique de polarité positive et une interface de connexion électrique de polarité négative.

Ledit au moins un élément mâle et/ou ledit au moins un élément femelle peuvent être, au moins en partie, formés par le revêtement.

Le ou les tenons de ladite une des première et deuxième faces de la cellule peuvent également être formés par le revêtement.

Le coeur électrique peut comporter une électrode négative et une électrode positive. Au moins l'une de l'électrode négative et de l'électrode positive peut comporter au moins un élément mâle d'électrode et/ou au moins un élément femelle d'électrode de forme respectivement semblable à celle dudit au moins un élément mâle de la cellule et/ou dudit au moins un élément femelle de la cellule. Le revêtement peut recouvrir ledit au moins un élément mâle d'électrode et/ou ledit au moins un élément femelle d'électrode, en présentant une forme qui épouse celle dudit au moins un élément mâle d'électrode et/ou celle dudit au moins un élément femelle d'électrode, de façon à respectivement former ledit au moins un élément mâle de la cellule et/ou ledit au moins un élément femelle de la cellule.

Ledit au moins un élément mâle et/ou ledit au moins un élément femelle peuvent s'étendre respectivement depuis un bord de ladite une des première et deuxième faces de la cellule et de ladite autre des première et deuxième faces de la cellule.

Ladite une des première et deuxième faces de la cellule peut comporter au moins un élément mâle et au moins un élément femelle. Ladite autre des première et deuxième faces de la cellule peut également comporter au moins un élément mâle et au moins un élément femelle.

La cellule peut comporter des moyens de maintien en position de la cellule avec une autre cellule du même type.

Les moyens de maintien en position peuvent comporter des orifices formés dans lesdits au moins un élément mâle et au moins un élément femelle, et dans le ou les éventuels tenons dudit au moins un élément mâle, les orifices dudit au moins un élément mâle et les orifices dudit au moins un élément femelle de la cellule étant respectivement configurés pour être en vis-à-vis des orifices d'au moins un élément femelle et des orifices d'au moins un élément mâle d'une autre cellule du même type, lors de l'assemblage de la cellule avec au moins une autre cellule du même type. Les moyens de maintien en position peuvent en outre comporter au moins une tige de maintien en position apte à être insérée dans les orifices desdits au moins un élément mâle et au moins un élément femelle de la cellule.

Les moyens de maintien en position peuvent comporter au moins une rainure de maintien en position formée sur la cellule, notamment le revêtement de la cellule, configurée de sorte à être superposée à au moins une rainure de maintien en position d'une autre cellule du même type, lors de l'assemblage de la cellule avec au moins une autre cellule du même type. Les moyens de maintien en position peuvent comporter en outre une pièce de maintien en position configurée pour s'insérer entre lesdites au moins une rainure de maintien en position de la cellule et de la cellule du même type lors de l'assemblage des cellules.

La cellule peut comporter, sur ladite une de ses première et deuxième faces, au moins deux éléments mâles s'étendant sensiblement parallèlement d'un bord à l'autre de ladite une des première et deuxième faces de la cellule, et sur ladite autre de ses première et deuxième faces, au moins deux éléments femelles s'étendant sensiblement parallèlement d'un bord à l'autre de ladite autre des première et deuxième faces de la cellule.

Lesdits au moins deux éléments mâles peuvent être respectivement superposés auxdits au moins deux éléments femelles.

La cellule peut comporter un coeur électrochimique comportant une électrode négative, une électrode positive et un électrolyte situé entre l'électrode négative et l'électrode positive. L'une de l'électrode positive et de l'électrode négative peut comporter un élément mâle d'électrode s'étendant vers ladite une des première et deuxième faces de la cellule et un élément femelle d'électrode s'étendant vers ladite autre des première et deuxième faces de la cellule, l'élément mâle d'électrode et l'élément femelle d'électrode étant superposés l'un à l'autre. L'autre de l'électrode positive et de l'électrode négative peut comporter un élément mâle d'électrode s'étendant vers ladite une des première et deuxième faces de la cellule et deux éléments femelles d'électrode s'étendant vers ladite autre des première et deuxième faces de la cellule ou deux éléments mâles d'électrode s'étendant vers ladite une des première et deuxième faces de la cellule et un élément femelle d'électrode s'étendant vers ladite autre des première et deuxième faces de la cellule, un élément mâle d'électrode et un élément femelle d'électrode étant superposés l'un à l'autre.

Le coeur électrochimique peut être recouvert par un revêtement configuré de sorte à ne pas recouvrir les interfaces de connexion électrique de polarité positive et les interfaces de connexion électrique de polarité négative des éléments mâles et femelles de la cellule, le revêtement définissant lesdits éléments mâles et femelles (6a, 6b) de la cellule et épousant les formes des éléments mâles d'électrode et des éléments femelles d'électrode.

La cellule peut présenter, sur l'une de ses première et deuxième faces, une interface de connexion électrique de polarité négative et une interface de connexion électrique de polarité positive et, sur l'autre de ses première et deuxième faces, une interface de connexion électrique de polarité positive et deux interfaces de connexion électriques de polarité négative, ou une interface de connexion électrique de polarité négative et deux interfaces de connexion électrique de polarité positive.

L'invention a encore pour objet, selon un autre de ses aspects, un ensemble comportant une première cellule et une deuxième cellule telles que définies ci-dessus, ledit au moins un élément mâle de la première cellule étant encastré dans ledit au moins un élément femelle de la deuxième cellule, ou ledit au moins un élément femelle de la première cellule étant encastré dans ledit au moins un élément mâle de la deuxième cellule, pour permettre l'assemblage et la connexion électrique des première et deuxième cellules entre elles.

Par ailleurs, l'invention a encore pour objet, selon un autre de ses aspects, un module électrique d'assemblage d'un système de stockage électrique, caractérisé en ce qu'il comporte un assemblage de plusieurs cellules telles que définies précédemment.

Le module peut être un module électrochimique d'assemblage comportant un assemblage de plusieurs cellules électrochimiques élémentaires.

Le module peut comporter au moins un élément mâle de module et au moins un élément femelle de module, respectivement du même type que lesdits au moins un élément mâle et au moins un élément femelle des cellules, pour permettre l'assemblage et la connexion électrique des cellules sur le module d'assemblage.

Le module peut comporter au moins une tige de connexion mâle apte à s'encastrer dans une pluralité d'éléments femelles des cellules, et au moins une tige de connexion femelle apte à s'encastrer dans une pluralité d'éléments mâles des cellules, de façon à permettre l'assemblage et la connexion électriques des cellules entre elles au sein du module d'assemblage.

L'invention a également pour objet, selon un autre de ses aspects, un système de stockage d'énergie, caractérisé en ce qu'il comporte un assemblage de plusieurs modules tels que définis précédemment.

Le système de stockage d'énergie peut comporter au moins un élément mâle de batterie (ou encore de système de stockage d'énergie) et au moins un élément femelle de batterie (ou encore de système de stockage d'énergie), respectivement du même type que lesdits au moins un élément mâle et au moins un élément femelle des cellules, pour permettre l'assemblage et la connexion électrique des cellules sur le système de stockage d'énergie.

L'invention a encore pour objet, selon un autre de ses aspects, un procédé de fabrication d'une cellule de stockage d'énergie électrique telle que définie précédemment, caractérisé en ce qu'il comporte une ou plusieurs des étapes suivantes :
a) positionner un coeur électrique, notamment un coeur électrochimique, dans un moule, le coeur électrique étant notamment constitué par un bobineau ou un stack,
b) surmouler autour du coeur électrique un matériau isolant, notamment un film en un matériau isolant, de préférence étanche et chimiquement stable par rapport à l'électrolyte du coeur électrochimique,
c) réaliser au moins une électrode positive ou négative sur au moins un bord du coeur électrique, notamment une rive du coeur électrique, ladite au moins une électrode positive ou négative comportant au moins un élément mâle ou femelle d'électrode positive ou négative,
d) remplir le coeur électrique avec un électrolyte,
e) éventuellement, en cas de réalisation d'une seule électrode positive ou négative dans l'étape c), réaliser l'autre électrode positive ou négative sur l'autre bord du coeur électrique, notamment sur l'autre rive du coeur électrique, ladite autre électrode positive ou négative comportant au moins un élément mâle ou femelle d'électrode positive ou négative,
f) surmouler un revêtement sur le coeur électrique et les deux électrodes positive et négative, de sorte à définir lesdits au moins un élément mâle et un élément femelle de la cellule, le revêtement ne recouvrant que partiellement lesdits au moins un élément mâle d'électrode et un élément femelle d'électrode de façon à former lesdites au moins une interface de connexion électrique de polarité négative et au moins une interface de connexion électrique de polarité positive.

Le procédé de fabrication selon l'invention peut avantageusement permettre de réaliser la cellule avec le moins d'éléments et le moins d'opérations possibles. Pour ce faire, le procédé utilise préférentiellement des étapes d'injection, de surmoulage et/ou de métallurgie des poudres, à partir d'un coeur électrique, notamment électrochimique, par exemple un stack ou un bobineau préalablement réalisé.

Le bobineau est un coeur électrochimique réalisé par enroulement d'une double électrode positive, d'un séparateur et d'une double électrode négative superposés.

Le stack est un coeur électrochimique réalisé par empilement d'une double électrode positive, d'un séparateur et d'une double électrode négative.

Le matériau isolant peut notamment être choisi parmi le polyéthylène (PE), le polypropylène (PP), le polyétheréthercétone (PEEK), le polyétherarylcétone (PEAK), le polyéthylène téréphtalate (PET), le polytétrafluoroéthylène (PTFE), entre autres.

Le procédé peut présenter une première variante de mise en oeuvre et comporter toutes les étapes a) à f) dans un ordre successif.

Dans l'étape b), le matériau isolant est avantageusement surmoulé autour du coeur électrique de sorte à ne pas recouvrir les bords, notamment les rives, du coeur électrique.

L'étape c) peut être une étape d'utilisation d'une méthode de métallurgie des poudres (désignée encore par méthode PIM pour « Powder Injection Molding » en anglais) pour injecter une électrode positive ou négative dans un matériau conducteur autour du bord du coeur électrique, notamment autour de la rive du coeur électrique.

L'étape d) de remplissage en électrolyte peut se faire selon plusieurs méthodes. Avec une injection sous vide dans le moule, on peut utiliser une méthode de dépression. Avec une atmosphère neutre, par exemple comportant de l'argon, on peut injecter l'électrolyte sous pression.

L'étape e) éventuelle peut également être une étape d'utilisation d'une méthode de métallurgie des poudres pour injecter l'autre électrode positive ou négative dans un matériau conducteur autour du bord du coeur électrique, notamment autour de la rive du coeur électrique.

Dans la première variante de mise en oeuvre du procédé selon l'invention, toutes les étapes réalisées après l'étape d) de remplissage en électrolyte sont préférentiellement réalisées à basse température pour éviter toute dégradation de l'électrolyte. De plus, l'électrode négative est préférentiellement réalisée avant l'électrode positive, car étant constituée du métal à plus haute température, elle nécessite une température de frittage plus élevée.

Le procédé peut présenter une deuxième variante de mise en oeuvre et comporter les étapes c), e), a), b), d) et f) dans un ordre successif, les étapes c) et e) étant des étapes d'utilisation d'une méthode de métallurgie des poudres.

Dans cette deuxième variante, il peut également être prévu une étape de formation d'au moins un orifice sur une des électrodes positive et négative pour permettre le remplissage en électrolyte.

Le procédé peut encore présenter une troisième variante de mise en oeuvre et comporter les étapes c), e), a), b), d) et f) dans un ordre successif, les étapes c) et e) étant des étapes de fixation d'une ou des deux électrodes positive et négative sur un ou les deux bords du coeur électrique, notamment les rives du coeur électrique, ces électrodes étant formées au moyen de languettes métalliques.

Les caractéristiques énoncées dans la présente description peuvent être prises isolément ou selon toutes combinaisons techniquement possibles avec d'autres caractéristiques.

### BRÈVE DESCRIPTION DES DESSINS

L'invention pourra être mieux comprise à la lecture de la description détaillée qui va suivre, d'exemples de mise en oeuvre non limitatifs de celle-ci, ainsi qu'à l'examen des figures, schématiques et partielles, du dessin annexé, sur lequel :
- la figure 1 représente, en perspective, un premier exemple de cellule de stockage d'énergie électrique conforme à l'invention,
- les figures 1A et 1B représentent respectivement, en perspective, des détails de réalisation d'éléments femelle et mâle d'une cellule de stockage d'énergie électrique conforme à l'invention,
- les figures 2 et 3 représentent respectivement, en perspective, des deuxième et troisième exemples de réalisation de cellule de stockage d'énergie électrique conforme à l'invention,
- les figures 4A et 4B représentent respectivement, en perspective, des exemples de tiges de connexion mâle et femelle pour l'assemblage et le raccordement électrique d'une pluralité d'éléments femelles et d'une pluralité d'éléments mâles de cellules de stockage d'énergie électrique conformes à l'invention,
- les figures 5A à 9B illustrent, schématiquement en coupe, des possibilités de forme pour réaliser des éléments mâles et femelles de cellules de stockage d'énergie électrique conformes à l'invention,
- la figure 10 représente, en perspective, un quatrième exemple de réalisation de cellule de stockage d'énergie électrique conforme à l'invention,
- la figure 11 illustre, en perspective et de façon schématique, la composition d'une cellule du type de celle de la figure 10,
- la figure 12 représente, en perspective, un cinquième exemple de réalisation de cellule de stockage d'énergie électrique conforme à l'invention,
- la figure 13 illustre, en perspective, un premier principe de maintien en position de cellules de stockage d'énergie électrique conformes à l'invention,
- les figures 14A et 14B illustrent, en perspective, un deuxième principe de maintien en position de cellules de stockage d'énergie électrique conformes à l'invention,
- les figures 15A et 15B représentent, respectivement avec non visibilité et visibilité en transparence des coeurs électrochimiques des cellules, une vue du dessous d'un assemblage en parallèle de deux cellules de stockage d'énergie électrique conformes à l'invention,
- les figures 16A et 16B représentent, respectivement avec non visibilité et visibilité en transparence des coeurs électrochimiques des cellules, une vue du dessus de l'assemblage en parallèle des deux cellules des figures 15A et 15B,
- les figures 17A et 17B représentent, respectivement avec non visibilité et visibilité en transparence des coeurs électrochimiques des cellules, une vue du dessus de l'assemblage en série de deux cellules de stockage d'énergie électrique conformes à l'invention,
- les figures 18A et 18B représentent, respectivement avec non visibilité et visibilité en transparence des coeurs électrochimiques des cellules, une vue du dessous de l'assemblage en série des deux cellules des figures 17A et 17B,
- la figure 19 représente, en perspective et avec visibilité du coeur électrochimique, un sixième exemple de réalisation de cellule de stockage d'énergie électrique conforme à l'invention,
- les figures 20A à 20G illustrent, en perspective, différentes étapes successives de mise en oeuvre d'une première variante du procédé de fabrication conforme à l'invention,
- les figures 21A à 21H illustrent, en perspective, différentes étapes successives de mise en oeuvre d'une deuxième variante du procédé de fabrication conforme à l'invention, et
- les figures 22A à 22F illustrent, en perspective, différentes étapes successives de mise en oeuvre d'une troisième variante du procédé de fabrication conforme à l'invention.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

Dans tous les exemples décrits ci-après, les cellules de stockage d'énergie électrique 1 sont des cellules électrochimiques élémentaires 1, destinées à former des générateurs électrochimiques. Néanmoins, comme il a été indiqué précédemment, les cellules de stockage d'énergie électrique peuvent être d'un autre type, permettant par exemple la formation de condensateurs et/ou de supercondensateurs électrochimiques ou diélectriques.

De plus, chaque cellule électrochimique élémentaire 1 comporte un coeur électrochimique 10, comportant une électrode négative 2, une électrode positive 3 et un électrolyte 4 entre les électrodes négative 2 et positive 3, de sorte à permettre la réalisation d'une réaction électrochimique.

Enfin, les cellules électrochimiques élémentaires 1 présentées ici sont de géométrie prismatique, comportant une face principale supérieure 1a, opposée à une face principale inférieure 1b, et deux faces latérales 1c et 1d, opposées l'une à l'autre. Bien entendu, l'invention ne se limite pas à une géométrie prismatique de la cellule 1, qui peut ainsi présenter tout type de géométrie d'architecture.

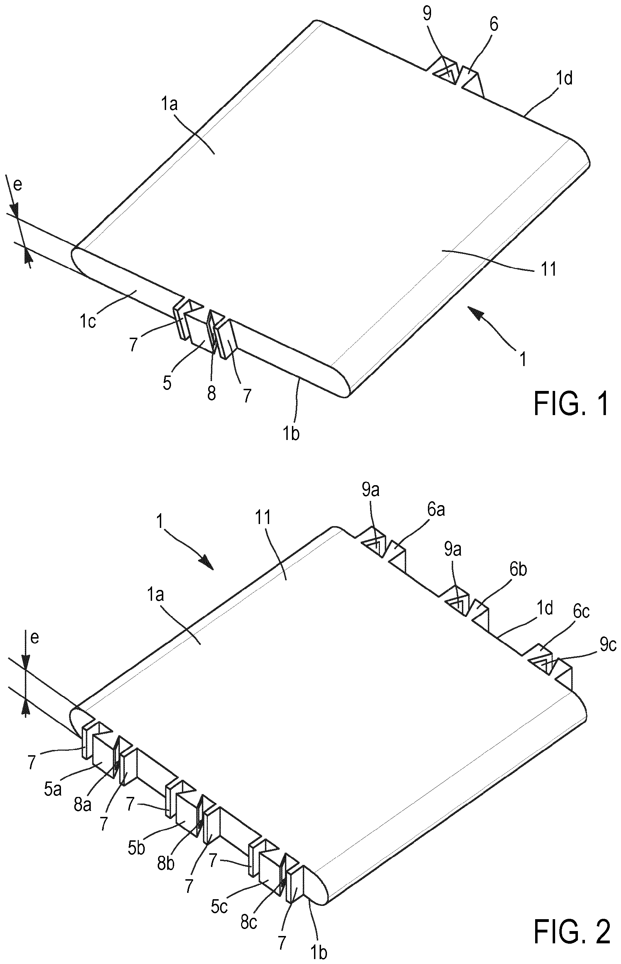

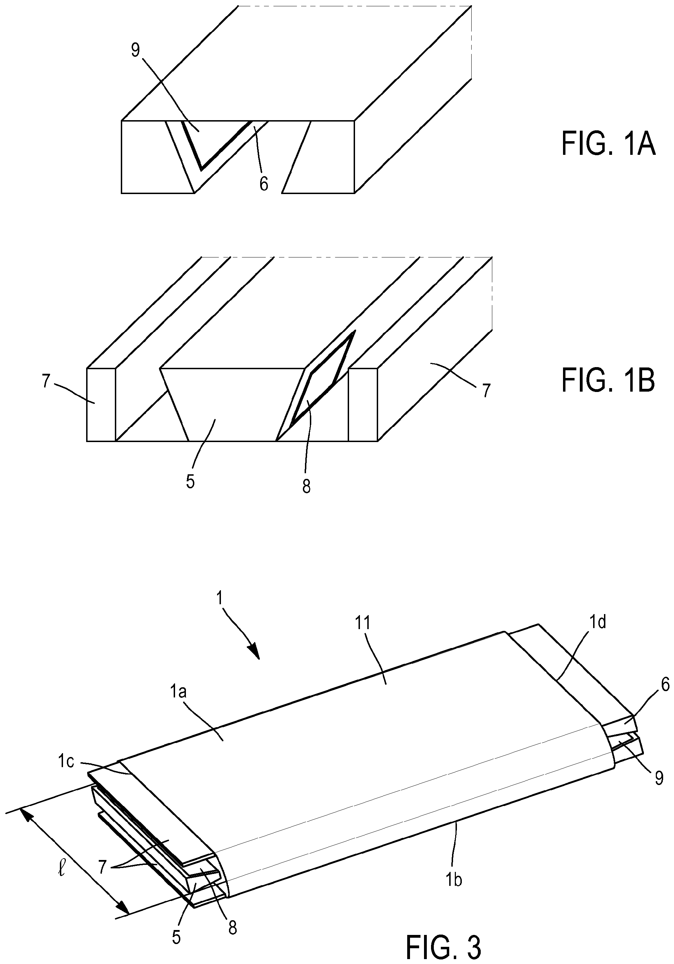

On a représenté sur la figure 1, en perspective, de façon schématique et partielle, un premier exemple de réalisation d'une cellule de stockage d'énergie électrique 1 conforme à l'invention, du type cellule électrochimique élémentaire 1.

La cellule 1 est notamment destinée à être intégrée dans un module électrochimique d'assemblage d'un système de stockage d'énergie.

La cellule 1 présente ainsi une première face 1c, correspondant à une première face latérale de la cellule 1, et une deuxième face 1d, correspondant à la face latérale opposée à la première face 1c.

Conformément à l'invention, la première face 1c comporte un élément mâle 5 et la deuxième face 1d comporte un élément femelle 6, les formes complémentaires des éléments mâle 5 et femelle 6 permettant leur encastrement l'un dans l'autre.

Autrement dit, l'élément mâle 5 de la cellule 1 peut permettre l'assemblage de la cellule 1 avec une autre cellule 1 du même type, par encastrement de cet élément mâle 5 sur l'élément femelle 6 de l'autre cellule 1 du même type. De même, l'élément femelle 6 de la cellule 1 peut permettre l'assemblage de la cellule 1 avec une autre cellule 1 du même type, par encastrement de cet élément femelle 6 sur l'élément mâle 5 de l'autre cellule 1 du même type.

Comme on peut le voir sur la figure 1, l'élément mâle 5 s'étend d'un bord à l'autre de la première face 1c, et l'élément femelle 6 s'étend également d'un bord à l'autre de la première face 1d.

En outre, l'élément mâle 5 de la cellule 1 présente une interface de connexion électrique 8 de polarité positive ou négative, et l'élément femelle 6 de la cellule 1 présente également une interface de connexion électrique 9 de polarité négative ou positive, les polarités des deux interfaces de connexion électrique 8 et 9 étant opposées puisque l'une étant reliée à l'électrode positive 3 (cathode) et l'autre étant reliée à l'électrode négative 2 (anode) du coeur électrochimique 10.

De cette façon, il est possible de réaliser la connexion électrique de la cellule 1 avec une autre cellule 1 du même type lorsqu'elles sont assemblées entre elles par le biais des éléments mâle 5 et femelle 6. Cette connexion électrique peut être réalisée en série ou en parallèle en fonction du sens d'assemblage des cellules 1 entre elles et des polarités des éléments mâle 5 et femelle 6.

Il est à noter que, dans la présente description, les éléments mâle 5 et femelle 6 constituent préférentiellement des rainures mâle 5 et femelle 6.

Le coeur électrochimique 10, plus détaillé par la suite, de la cellule 1 de la figure 1 est par ailleurs recouvert par un revêtement 11 (ou « packaging » selon le terme anglais signifiant « emballage »).

Ce revêtement 11 permet de protéger le coeur électrochimique 10. Il recouvre notamment l'intégralité de celui-ci à l'exception des interfaces de connexion électrique 8 et 9 des éléments mâle 5 et femelle 6, afin d'assurer la connexion électrique des cellules 1 entre elles. En particulier, au niveau de ces interfaces de connexion électrique 8 et 9, apparaissent directement l'électrode positive 3 pour former une interface de connexion électrique de polarité positive ou l'électrode négative 2 pour former une interface de connexion électrique de polarité négative.

Avantageusement, comme on peut le voir sur la figure 1, les interfaces de connexion électrique 8 et 9 sont respectivement formées dans des zones d'accessibilité réduite ou nulle des éléments mâle 5 et femelle 6. Autrement dit, les formes des éléments mâle 5 et femelle 6 permettent d'avoir des interfaces de connexion électrique 8 et 9 peu ou pas accessibles pour réduire les risques, notamment de court-circuit.

Les figures 1A et 1B représentent respectivement, en perspective, des détails de réalisation des éléments femelle 6 et mâle 5 de la cellule 1.

Les interfaces de connexion électrique 8 et 9 peuvent ou non s'étendre sur toute la longueur des éléments mâle 5 et femelle 6, notamment d'un bord à l'autre des première 1c et deuxième 1d faces de la cellule 1. Elles peuvent aussi être formées à une extrémité des éléments mâle 5 et femelle 6.

La figure 1, et la figure 1B, illustrent également la possibilité d'avoir des tenons 7 de part et d'autre de l'élément mâle 5. La présence des tenons 7, s'étendant notamment sensiblement parallèlement entre eux et à l'élément mâle 5, et notamment d'un bord à l'autre de la première face 1c, permet d'obtenir deux rainures venant s'encastrer de part et d'autre de l'élément femelle 6 d'une autre cellule 1 du même type lors de l'assemblage de la cellule 1, et permet avantageusement de réduire l'accessibilité aux interfaces de connexion électrique 8 pour éviter toute possibilité de mise en contact accidentelle des différentes bornes électriques.

Par ailleurs, la figure 1 illustre la possibilité pour la cellule 1 d'avoir un seul élément mâle 5 ou femelle 6 à chaque extrémité de la cellule 1, c'est-à-dire sur la première face latérale 1c et sur la première face latérale 1d, du côté des rives 12 du coeur électrochimique 10, comme il sera décrit par la suite. Sur cette figure 1, les éléments mâle 5 et femelle 6 sont situés dans le sens de l'épaisseur e de la cellule 1.

La figure 2 représente, en perspective, un deuxième exemple de réalisation d'une cellule électrochimique élémentaire 1 conforme à l'invention, dans lequel les éléments mâle 5a, 5b, 5c et femelles 6a, 6b, 6c sont formés dans le sens de l'épaisseur e de la cellule 1.

En particulier, la première face 1c comporte trois éléments mâles 5a, 5b et 5c, comportant respectivement des interfaces de connexion électrique 8a, 8b et 8c, et la deuxième face 1d comporte trois éléments femelles 6a, 6b et 6c, comportant respectivement des interfaces de connexion électrique 9a, 9b et 9c.

Dans cette configuration de la figure 2, l'augmentation du nombre d'éléments mâles 5a, 5b, 5c et femelles 6a, 6b, 6c peut permettre une augmentation de la surface de connexion de la cellule 1.

La figure 3 représente par ailleurs, en perspective, la possibilité pour la cellule électrochimique élémentaire 1 de comporter des éléments mâle 5 et femelle 6 formés dans le sens de la largeur l de la cellule 1.

Les premier, deuxième et troisième exemples de réalisation de la cellule 1 représentés respectivement sur les figures 1, 2 et 3, permettent préférentiellement un montage en série de deux cellules 1 du même type.

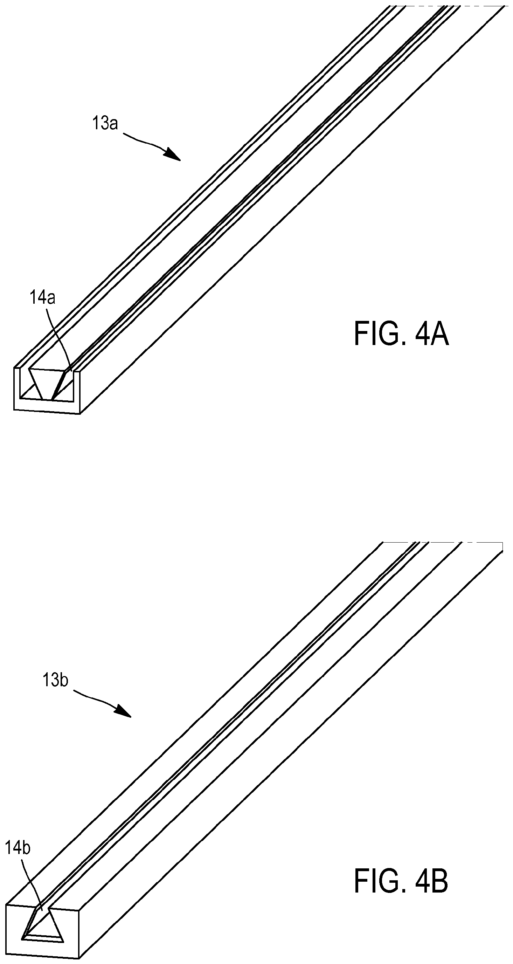

Toutefois, le montage en parallèle peut être obtenu par l'intermédiaire du module électrochimique d'assemblage ou du système de stockage d'énergie comportant des éléments mâles et femelles du même type que ceux des cellules 1. Le montage en parallèle peut également être réalisé par l'intermédiaire de tiges de connexion 13a et 13b, comme décrites en référence aux figures 4A et 4B.

Les figures 4A et 4B représentent en effet respectivement, en perspective, une tige de connexion mâle 13a destinée à être encastrée dans une pluralité d'éléments femelles 6 des cellules 1, et une tige de connexion femelle 13b, destinée à être encastrée dans une pluralité d'éléments mâles 5 des cellules 1.

La tige de connexion mâle 13a comporte une interface de connexion électrique 14a et la tige de connexion femelle 13b comporte une interface de connexion électrique 14b.

La tige de connexion mâle 13a présente une forme d'encastrement semblable à celle des éléments mâles 5 des cellules 1, et la tige de connexion femelle 13b présente une forme d'encastrement semblable à celle des éléments femelles 6 des cellules 1.

De même, les tiges de connexion mâle 13a et femelle 13b comportent respectivement les interfaces de connexion électrique 14a et 14b dans des zones qui limitent leur accessibilité, autrement dit dans des zones masquées des tiges de connexion 13a et 13b, de sorte à limiter les risques, notamment de court-circuit.

L'utilisation de telles tiges de connexion mâle 13a et femelle 13b peut notamment être privilégiée pour des cellules électrochimiques élémentaires 1 de faibles dimensions et/ou pour des applications à haute intensité.

Le maintien en position des cellules 1 de ce type, avec présence de tiges de connexion 13a, 13b, entre elles ou avec le module électrochimique d'assemblage ou le système de stockage d'énergie, peut se faire par l'intermédiaire notamment d'une ou plusieurs tiges de maintien en position, comme il sera décrit par la suite.

Dans les exemples précédemment décrits en référence aux figures 1 à 4B, et également dans les exemples qui suivent, les éléments mâles 5 se présentent sous la forme de queues d'aronde aptes à s'encastrer dans des logements correspondants des éléments femelles 6. Toutefois, ce choix n'est nullement limitatif.

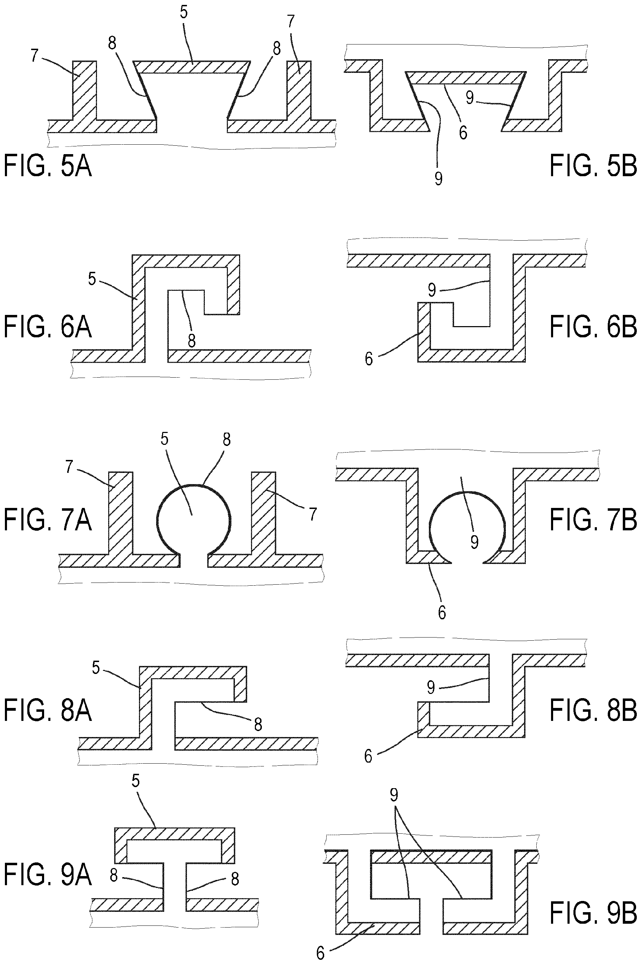

Ainsi, à titre d'exemples non exhaustifs de combinaisons possibles entre un élément mâle 5 et un élément femelle 6 pour encastrement, les figures 5A-5B, 6A-6B, 7A-7B, 8A-8B et 9A-9B illustrent des possibilités de formes possibles pour les éléments mâle 5 et femelle 6 de la cellule 1.

Les éléments mâles 5 et femelles 6 peuvent être de formes diverses, mais il est préférable de permettre un assemblage et un désassemblage des cellules 1 tout en supprimant le plus grand nombre de degrés de liberté.

Les figures 5A et 5B illustrent respectivement, en coupe, des éléments mâle 5 et femelle 6 encastrables par un principe de queue d'aronde.

Les figures 6A et 6B illustrent respectivement, en coupe, des éléments mâle 5 et femelle 6 encastrables par un principe de crochet avec fente.

Les figures 7A et 7B illustrent respectivement, en coupe, des éléments mâle 5 et femelle 6 encastrables par un principe de rainure cylindrique, en particulier de section circulaire.

Les figures 8A et 8B illustrent respectivement, en coupe, des éléments mâle 5 et femelle 6 encastrables par un principe de crochet.

Les figures 9A et 9b illustrent respectivement, en coupe, des éléments mâle 5 et femelle 6 encastrables par un principe de forme en « T ».

Comme expliqué précédemment, les exemples des figures 5A et 7A peuvent présenter des tenons 7 de part et d'autre de l'élément mâle 5 pour permettre de « masquer » davantage l'interface de connexion électrique 8 et limiter les risques associés à une exposition trop importante de celle-ci.

Pour les exemples des figures 6A, 8A et 9A, la faible hauteur de l'espacement entre la première face et l'élément mâle 5 permettant l'assemblage de la cellule 1 rend l'interface de connexion électrique 8 très difficilement accessible, de sorte que la présence de tenons 7 ne soit pas nécessaire.

Par ailleurs, selon la composition chimique du coeur électrochimique 10 de la cellule 1, des dispositifs de sécurité peuvent être ajoutés pour éviter la surpression ou les court-circuits externes. De préférence, ces dispositifs de sécurité sont alors placés à une extrémité de la cellule 1 derrière une interface de connexion électrique, dans des parties qui ne servent pas à la connexion électrique, voire dans l'espace interstitiel entre les cellules 1 lorsqu'il existe, c'est-à-dire l'espace qui peut séparer deux cellules 1 assemblées entre elles, comme il sera décrit par la suite.

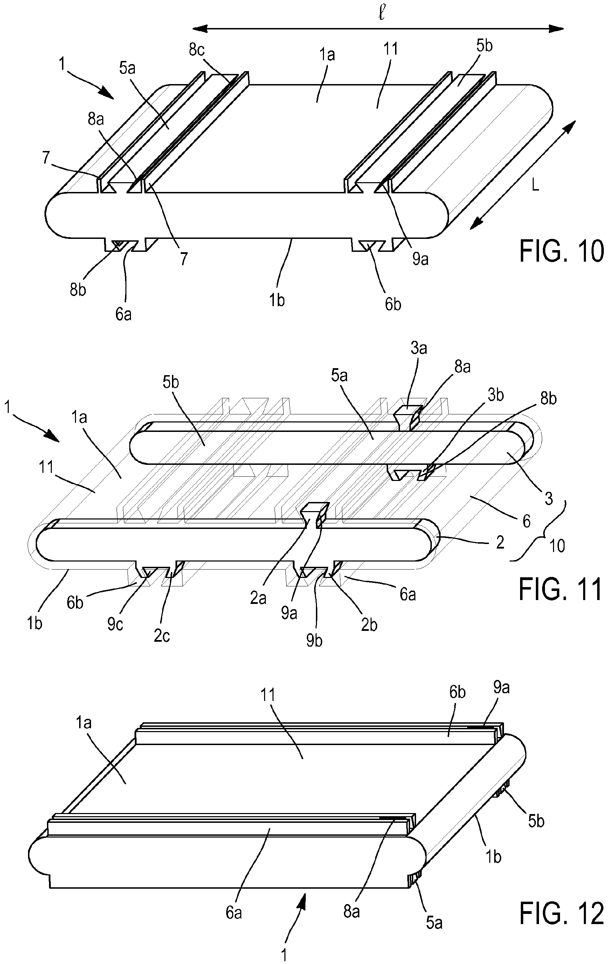

On a représenté sur la figure 10, en perspective, un quatrième exemple de réalisation d'une cellule électrochimique élémentaire 1 conforme à l'invention.

Dans cet exemple, la cellule 1 comporte, sur sa première face 1a, deux éléments mâles 5a et 5b qui s'étendent parallèlement entre eux, d'un bord à l'autre de la première face 1a. De plus, la cellule 1 comporte, sur sa deuxième face 1b, deux éléments femelles 6a et 6b qui s'étendent parallèlement entre eux, d'un bord à l'autre de la deuxième face 1b.

Dans cet exemple, les rainures mâles 5a, 5b et femelles 6a, 6b parallèles entre elles se présentent sous la forme d'un système avec queue d'aronde. Toutefois, il pourrait en être autrement, comme expliqué précédemment.

Les rainures mâles, 5a, 5b et femelles 6a, 6b de la cellule 1 permettent d'assurer à la fois une fonction de fixation de la cellule 1 avec une autre cellule 1 du même type, et également la connexion électrique de la cellule 1 avec une autre cellule 1 du même type par l'intermédiaire des interfaces de connexion électrique 8a, 8b, 8c et 9a.

Les éléments mâles 5a et 5b, et les éléments femelles 6a et 6b, sont réalisés directement par le revêtement 11 qui recouvre le coeur électrochimique 10 de la cellule 1.

De façon avantageuse, le revêtement 11 peut être réalisé dans un matériau non conducteur et facile à mettre en oeuvre. Par exemple, le revêtement 11 peut être réalisé dans un matériau possédant des caractéristiques nécessaires à la sécurité de la cellule 1, notamment en termes de mécanique, thermique, électrique, résistance au feu, en autres. Le revêtement 11 peut par exemple être constitué par un thermoplastique ou une résine thermodurcissable, chargée ou non.

De manière avantageuse, ce type de cellule 1 selon l'invention peut permettre le montage de plusieurs cellules 1 du même type entre elles sans avoir besoin d'une pièce de connexion supplémentaire.

Le choix et le positionnement des interfaces de connexion électrique 8a, 8b, 8c et 9a peuvent être déterminés de sorte que les cellules 1 puissent être connectées en série ou en parallèle après rotation de 180° d'une cellule sur deux.

La figure 11 représente, en perspective et avec le revêtement 11 en transparence, un exemple de cellule 1 conforme à l'invention du type de celle représentée sur la figure 10, dans lequel on peut voir le coeur électrochimique 10 de la cellule 1.

En particulier, le coeur électrochimique 10 de la cellule 1 comporte une électrode négative 2 et une électrode positive 3, l'ensemble étant recouvert par le revêtement 11, lequel permet la formation des éléments mâles 5a et 5b et des éléments femelles 6a et 6b.

Sur cette figure 11, de façon analogue à l'exemple de la figure 10 mais non identique, l'électrode négative 2 comporte un élément mâle d'électrode 2a et deux éléments femelles d'électrode 2b et 2c, et l'électrode positive 3 comporte un élément mâle d'électrode 3a et un élément femelle d'électrode 3b.

Les éléments mâles d'électrode 2a et 3a permettent de former l'élément mâle 5a de la cellule 1, une fois le revêtement 11 mis en place. Les éléments femelles d'électrode 2b et 3b permettent de former l'élément femelle 6a de la cellule 1, une fois le revêtement 11 mis en place. Enfin, l'élément femelle d'électrode 2c permet de former l'élément femelle 6b de la cellule 1, une fois le revêtement 11 mis en place. L'élément mâle 5b de la cellule 1 est formé par le revêtement 11 sans recouvrement d'un élément mâle ou femelle d'électrode du coeur électrochimique 10. Autrement dit, l'élément mâle 5b de la cellule 1 n'a d'utilité que pour l'assemblage de la cellule 1 à une autre cellule 1 du même type, et non pour la connexion électrique de la cellule 1 à une autre cellule 1 du même type.

Ainsi, les éléments mâles d'électrode 2a et 3a permettent respectivement de former les interfaces de connexion électrique 9a et 8a de l'élément mâle 5a de la cellule 1, par non recouvrement de ces éléments mâles d'électrode 2a et 3a par le revêtement 11. De même, les éléments femelles d'électrode 2b et 3b permettent respectivement de former les interfaces de connexion électrique 9b et 8b de l'élément femelle 6a de la cellule 1, par non recouvrement de ces éléments femelles d'électrode 2b et 3b par le revêtement 11. Enfin, l'élément femelle d'électrode 2c permet de la même façon de former l'interface de connexion électrique 9c de l'élément femelle 6b de la cellule 1 par non recouvrement de l'élément femelle d'électrode 2c par le revêtement 11.

Autrement dit, ce type de cellule 1, tel que représenté par exemple sur les figures 10 et 11, est prévu de la manière suivante : sur chacune des première 1a et deuxième 1b faces de la cellule 1, un des deux éléments (mâle ou femelle) a une ouverture sur l'électrode positive 3 et sur l'électrode négative 2 de la cellule 1. De plus, sur une des faces, le deuxième élément (mâle ou femelle) n'a qu'une ouverture sur une seule des électrodes (négative ou positive), et sur l'autre face de la cellule 1, le deuxième élément (mâle ou femelle) n'a pas d'ouverture sur les électrodes positive et négative.

Plus précisément, sur l'exemple de la figure 11, sur la première face 1a de la cellule 1, l'élément mâle 5a a une ouverture sur l'électrode positive 3 et une ouverture sur l'électrode négative 2, et l'élément mâle 5b n'a aucune ouverture sur les électrodes négative 2 et positive 3. Sur la deuxième face 1b de la cellule 1, l'élément femelle 6a a une ouverture sur l'électrode négative 2 et une ouverture sur l'électrode positive 3, et l'élément femelle 6b a une ouverture sur l'électrode négative 2.

Comme expliqué précédemment, chaque ouverture sur l'électrode positive 3 ou l'électrode négative 2 est réalisée dans une partie protégée des éléments mâles ou femelles, qui ne permet pas l'introduction accidentelle d'un élément extérieur, par exemple le doigt d'un opérateur ou tout autre objet conducteur ou non.

Alors que les figures 10 et 11 représentent un exemple de positionnement des éléments mâles 5a, 5b et femelles 6a, 6b en s'étendant selon la longueur L de la cellule 1, la figure 12 représente un cinquième exemple de réalisation d'une cellule électrochimique élémentaire 1 conforme à l'invention, dans lequel les éléments mâles 5a, 5b et femelles 6a, 6b s'étendent selon la largeur l de la cellule 1.

Par ailleurs, afin de faciliter la réalisation des cellules 1, les éléments mâles 5a, 5b et femelles 6a, 6b sont préférentiellement positionnés de façon à avoir au moins une portion de ceux-ci en vis-à-vis avec une rive 12 du coeur électrochimique 10.

La connexion électrique et l'assemblage entre deux cellules 1 du même type, ou entre une cellule 1 et le module d'assemblage ou le système de stockage d'énergie équipé d'éléments mâles et femelles du même type, peut se faire en glissant une cellule 1 dans une autre cellule 1, ou dans le module d'assemblage ou le système de stockage d'énergie, par l'intermédiaire des éléments mâles 5a, 5b et femelles 6a, 6b.

Toutefois, au lieu d'un assemblage par liaison glissière, il pourrait également être possible, notamment pour un gain de temps, de réaliser une fixation encastrable par pression en utilisant par exemple un matériau déformable élastiquement et une forme des éléments mâles et femelles adaptée.

Par ailleurs, pour éviter tout déplacement, dû par exemple aux vibrations, aux mouvements, aux chocs, pouvant conduire à une dégradation des électrodes positive 3 et négative 2 par frottement ou diminution de la zone de connexion, les cellules 1 peuvent être maintenues en position entre elles.

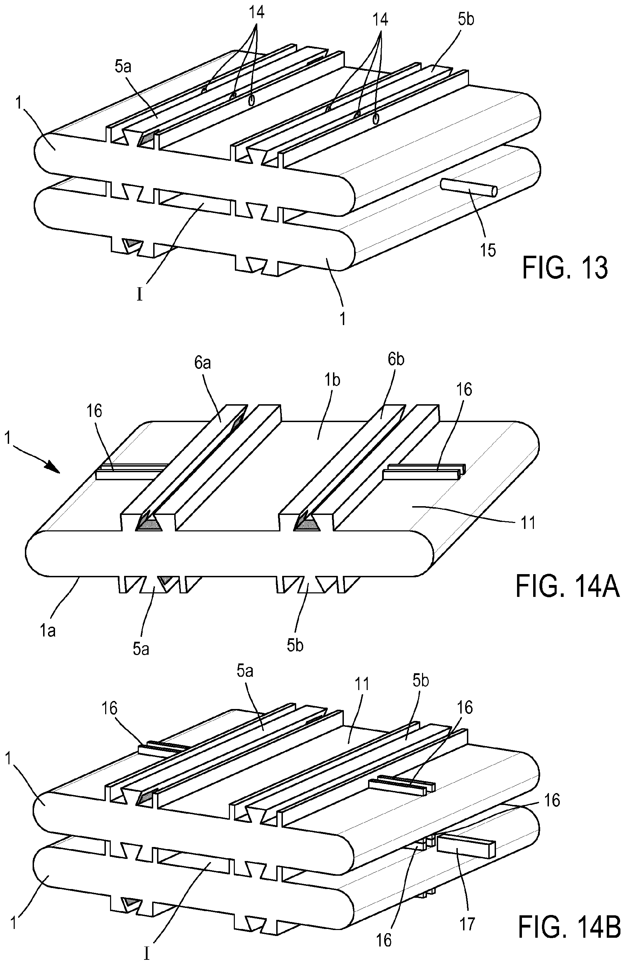

Le maintien en position peut être réalisé par l'intermédiaire de moyens de maintien en position tels que décrits en référence aux figures 13, 14A et 14B.

Ce maintien en position peut par exemple être réalisé par l'utilisation d'une pièce de fixation externe telle qu'une goupille, une vis, une clavette ou une cheville à extension.

La figure 13 illustre par exemple la possibilité d'avoir des orifices 14 formés dans les éléments mâles 5a, 5b et les éléments femelles 6a, 6b, de façon à ce que les orifices 14 soient en vis-à-vis les uns des autres lors de l'assemblage. Une tige de maintien en position 15 peut alors être insérée au travers des orifices 14 pour permettre un maintien en position des cellules 1 entre elles.

La figure 14A illustre par ailleurs la possibilité de prévoir sur la surface de la première face 1a et la deuxième face 1b de la cellule 1 des rainures de maintien en position 16, par exemple formées par le revêtement 11.

Lors de l'assemblage des cellules 1 entre elles, comme représenté sur la figure 14B, les rainures 16 sont positionnées en vis-à-vis les unes contre les autres, et une pièce de maintien en position 17, par exemple une clavette, peut être insérée entre les rainures de maintien en position 16 de manière à finaliser la fixation des cellules 1 entre elles.

Ainsi, comme l'illustrent les figures 14A et 14B, on peut de façon générale prévoir des formes spécifiques sur le revêtement 11 des cellules 1 que viennent compléter une ou plusieurs pièces de fixation externes. Les rainures 16 peuvent notamment être formées perpendiculairement aux éléments mâles 5a, 5b et aux éléments femelles 6a, 6b, afin de permettre l'insertion de la pièce de maintien en position 16 empêchant la translation. Alternativement, il serait également possible d'utiliser un boîtier à encoches pour fixation d'excentrique.

Le maintien en position des cellules 1 entre elles peut aussi s'effectuer au niveau des éléments mâles 5a, 5b ou des éléments femelles 6a, 6b par apport et/ou déformation de matière. Il peut par exemple être possible d'utiliser des procédés tels que le soudage plastique, le poinçonnage ou encore le soudage FSW (pour « Friction Stir Welding » en anglais). Il peut également être possible de souder et/ou de poinçonner une plaque extérieure en surface de l'assemblage des cellules 1.

De même, ces principes de maintien en position décrits ci-dessus peuvent être appliqués pour l'assemblage des cellules 1 avec le module d'assemblage et/ou le système de stockage d'énergie. Enfin, une autre méthode pourrait consister à réaliser des formes dans le module d'assemblage et/ou le système de stockage d'énergie, dans lesquelles les cellules 1 peuvent être maintenues, par montage en force.

Avantageusement, avec les cellules électrochimiques élémentaires 1 du type de celles représentées sur les figures 10 à 14B, il est possible d'effectuer un montage en série ou en parallèle des cellules 1 entre elles selon le sens dans lequel elles sont glissées les unes dans les autres.

La modularité du montage est permise par un positionnement adapté des interfaces de connexion électrique positives et négatives. Ainsi, une des deux électrodes positive et négative possède une connexion dans chacun des deux éléments mâles ou femelles d'une des faces et une connexion dans un seul élément mâle ou femelle de la face opposée, alors que la seconde électrode positive ou négative possède une connexion uniquement dans un élément mâle ou femelle de chaque face, les deux connexions de la seconde électrode positive ou négative étant positionnées dans les deux éléments mâles ou femelles en vis-à-vis qui possèdent une connexion avec la première électrode positive ou négative.

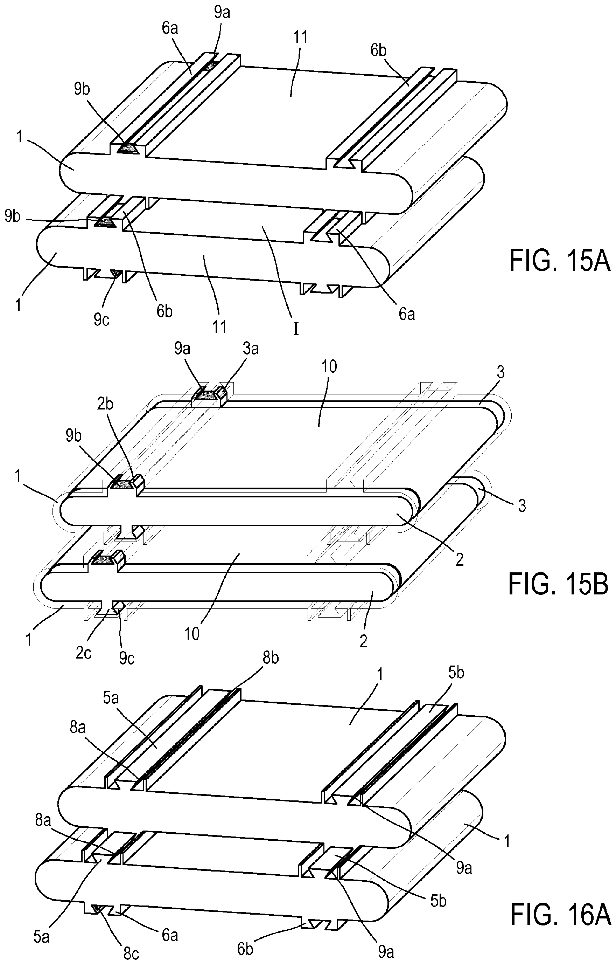

A titre d'exemple, on a représenté sur les figures 15A à 18B des exemples d'assemblage de deux cellules électrochimiques élémentaires 1 conformes à l'invention, du type comportant deux éléments mâles 5a, 5b s'étendant de façon parallèle sur une première face de la cellule 1 et deux éléments femelles 6a, 6b s'étendant de façon parallèle sur une deuxième face de la cellule 1.

Les figures 15A et 15B représentent par exemple une vue de dessous d'un assemblage en parallèle de deux cellules 1, la figure 15B laissant apparaître le coeur électrochimique 10 des cellules 1.

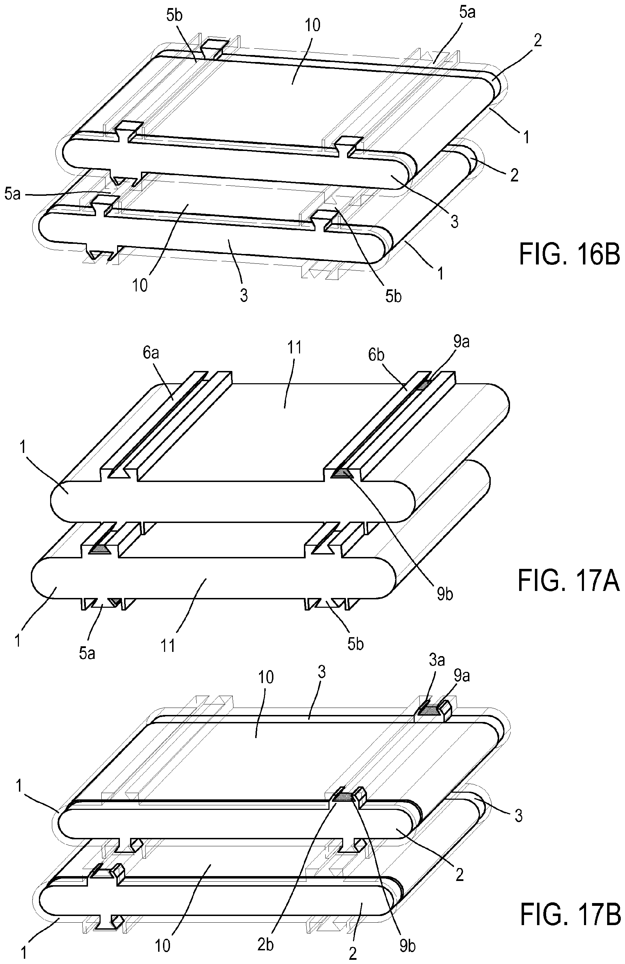

Les figures 16A et 16B représentent une vue de dessus de l'assemblage des figures 15A et 15B.

Les figures 17A et 17B représentent une vue de dessus d'un assemblage en série de deux cellules 1 conformes à l'invention, la figure 17B laissant apparaître le coeur électrochimique 10 des cellules 1.

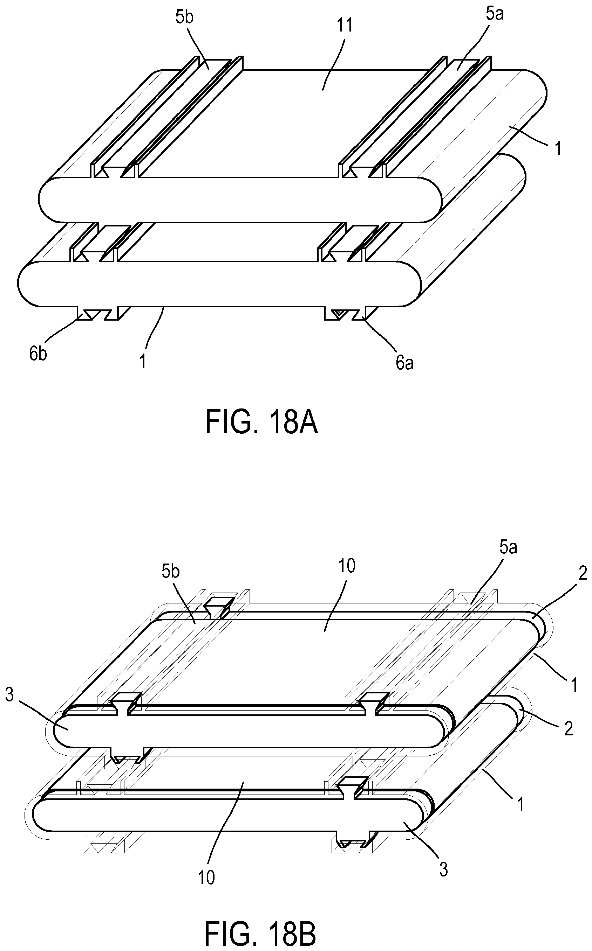

Les figures 18A et 18B représentent une vue de dessous de l'assemblage des deux cellules 1 des figures 17A et 17B.

Comme on peut le voir sur les figures 10A à 18B, l'assemblage de deux cellules 1 du type comprenant des éléments mâles 5a, 5b parallèles entre eux et des éléments femelles 6a, 6b parallèles entre eux engendrent l'apparition d'espaces interstitiels I entre les cellules 1, due à la hauteur des éléments mâles 5a, 5b et des éléments femelles 6a, 6b. Ces espaces interstitiels I sont fonctions des dimensions et de l'utilisation des cellules 1 (éléments de puissance ou de courant).

Toutefois, ces espaces interstitiels I peuvent être utilisés pour intégrer par exemple un élément de refroidissement ou autre, l'élément de refroidissement pouvant par exemple être une plaque froide, un système de caléoduc, un système par fluide caloporteur et/ou un système par conduction thermique.

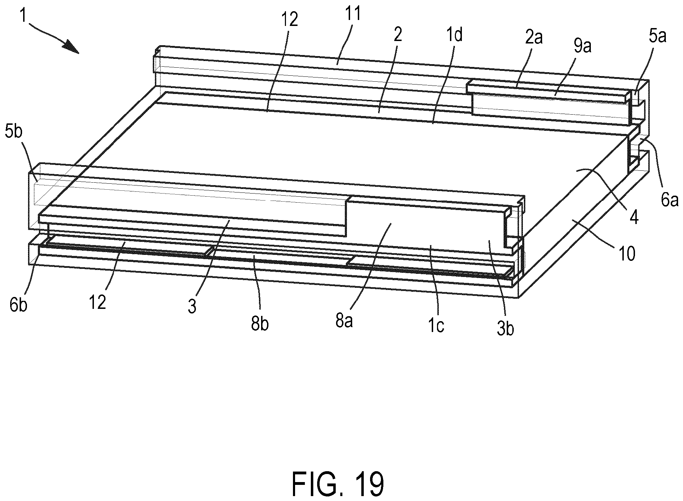

Par ailleurs, la figure 19 représente, en perspective et avec visibilité du coeur électrochimique 10 de la cellule 1, un sixième exemple de réalisation d'une cellule électrochimique élémentaire 1 conforme à l'invention.

Dans cet exemple, une première face latérale 1c de la cellule 1 comporte à la fois un élément mâle 5b et un élément femelle 6b, l'élément mâle 5b s'étendant depuis un bord de la première face 1c. En outre, la deuxième face 1d de la cellule 1 comporte à la fois un élément mâle 5a et un élément femelle 6a, l'élément mâle 5a s'étendant depuis un bord de la deuxième face 1d.

Le coeur électrochimique 10 est formé par une électrode négative 2 et une électrode positive 3, entre lesquelles est situé un électrolyte 4 pour la réalisation de la réaction électrochimique.

L'électrode positive 3 comporte un élément mâle d'électrode 3b permettant de former l'interface de connexion électrique 8a de l'élément mâle 5b, et l'électrode négative 2 comporte un élément mâle d'électrode 2a permettant de former l'interface de connexion électrique 9a de l'élément mâle 5a. De plus, les éléments femelles 6a et 6b peuvent comporter des interfaces de connexion électrique 9b et 8b formées, au moins en partie, directement par les électrodes négative 2 et positive 3.

De façon avantageuse, les éléments mâles 5a, 5b et les éléments femelles 6a, 6b sont positionnés au niveau des rives 12 du coeur électrochimique 10.

De façon avantageuse, le système de double rainure (ou double éléments mâle-femelle) sur chaque face latérale de la cellule 1 permet de supprimer les espaces interstitiels I apparaissant entre les cellules 1 lors de l'assemblage.

Pour le dimensionnement des interfaces de connexion électrique 8, 9 permettant à la fois la sécurité et le bon fonctionnement de la cellule 1, on peut dimensionner deux valeurs : l'écart maximum de l'ouverture d'une rainure (mâle 5 ou femelle 6) et la surface limitant le passage du courant. Le dimensionnement d'une paire de rainures 5 ou 6 sur une face de la cellule 1 s'effectue sur le plus grand écart maximum de l'ouverture d'une des deux rainures, alors qu'il s'effectue sur la plus petite surface limitant le passage du courant, la surface limitant le passage du courant étant la plus petite surface perpendiculaire au flux du courant.

Suivant la géométrie et les dimensions des interfaces de connexion électrique, cette surface est la plus petite des surfaces entre : la surface de contact, la surface de la partie conductrice sortant de l'isolant de l'élément mâle 5 ou la somme des surfaces conductrices sortant de l'isolant de l'élément femelle 6.

Avantageusement, la surface limitant le passage du courant est déterminée par un calcul de thermique en fonction des caractéristiques électriques et thermiques du conducteur, de l'isolant et de l'environnement. Un premier dimensionnement peut être effectué en utilisant une densité de courant maximum de 5 A.mm⁻² dans le cuivre, de 3 A.mm⁻² dans l'aluminium et de 1, 15 A.mm⁻² dans le nickel. De façon à ne pas pouvoir insérer un objet de manière accidentelle dans l'élément mâle 5 ou femelle 6, l'écart maximum de l'ouverture est préférentiellement inférieur ou égal à 5 mm.

On va maintenant décrire ci-après des modes de réalisation du procédé de fabrication conforme à l'invention. Dans ces exemples, le coeur électrique est un coeur électrochimique 10 et la cellule est une cellule électrochimique 1, bien que ce ne soit nullement limitatif.

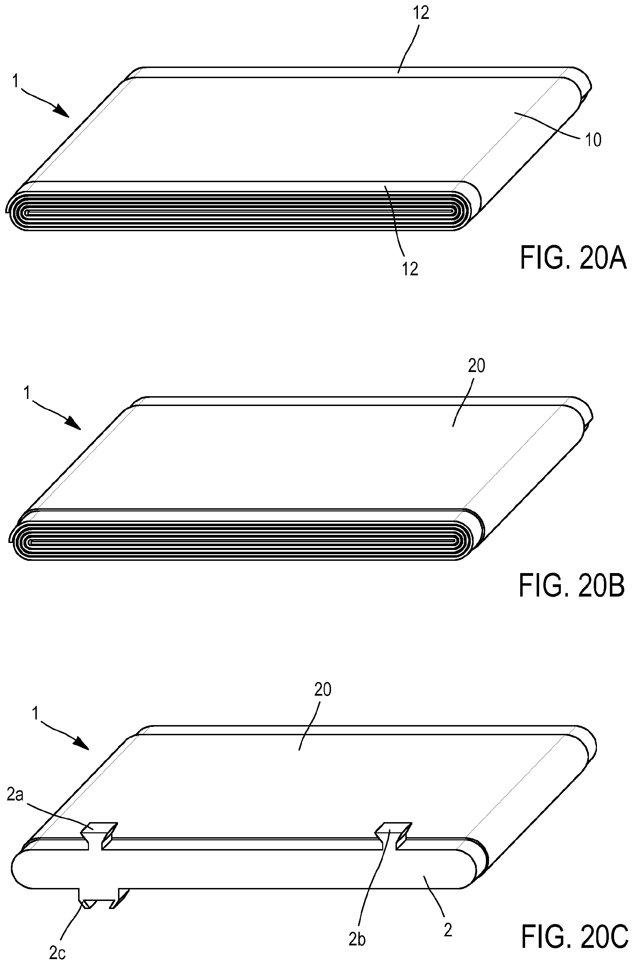

Tout d'abord, les figures 20A à 20G illustrent, en perspective, différentes étapes successives de mise en oeuvre d'une première variante du procédé conforme à l'invention.

La première variante du procédé consiste, à partir d'un coeur électrochimique 10 sous la forme d'un stack ou d'un bobineau placé dans un moule d'injection, à surmouler les différentes parties de la cellule 1 et du revêtement 11 (« packaging »), ainsi qu'à injecter l'électrolyte 4 à l'intérieur du coeur électrochimique 10.

Cette première variante a pour objectif la fabrication complète de la cellule 1 sans nécessiter de la sortir du moule.

Dans le cas d'un coeur électrochimique 10 sous la forme d'un stack, celui-ci est préférentiellement réalisé de façon à avoir les deux rives 12 dépassant respectivement d'un côté et de l'autre côté.

La figure 20A illustre la première étape de la première variante avec un coeur électrochimique 10 sous la forme d'un bobineau.

Cette première étape de réalisation de la cellule 1 consiste à placer le coeur électrochimique 10 dans un moule. Les rives 12 sont situées de chaque côté du coeur électrochimique 10.

La figure 20B illustre la deuxième étape de la première variante. Dans cette deuxième étape, un matériau isolant, notamment un film en un matériau isolant 20, est surmoulé autour du coeur électrochimique 10, en veillant à laisser les rives 12 libres de matière.

Le film en un matériau 20, isolant, étanche et chimiquement stable vis-à-vis de l'électrolyte peut notamment être choisi parmi le polyéthylène (PE), le polypropylène (PP), le polyétheréthercétone (PEEK), le polyétherarylcétone (PEAK), le polyéthylène téréphtalate (PET), le polytétrafluoroéthylène (PTFE), entre autres.

La figure 20C illustre la troisième étape de la première variante. Dans cette troisième étape, une méthode de métallurgie des poudres (PIM pour « Powder Injection Molding » en anglais) est utilisée pour injecter une borne dans un matériau conducteur autour de la rive 12 de l'anode pour former l'électrode négative 2, comportant par exemple deux éléments mâles d'électrode 2a et 2b, et un élément femelle d'électrode 2c.

Le procédé PIM consiste en l'injection d'un mélange de poudre de métal, céramique ou autres matériaux avec un liant polymère. Ce procédé nécessite, après injection, une étape de « déliantage » pour retirer le liant et une étape de frittage pour obtenir ses propriétés finales. Ces deux étapes peuvent être réalisées en même temps.

La borne peut être injectée par exemple avec un mélange de cuivre ou d'aluminium et d'un liant.

L'utilisation de ce procédé PIM peut permettre l'injection en une pièce de la borne à la forme finale souhaitée et peut permettre d'éliminer toute pièce supplémentaire nécessitant un assemblage.

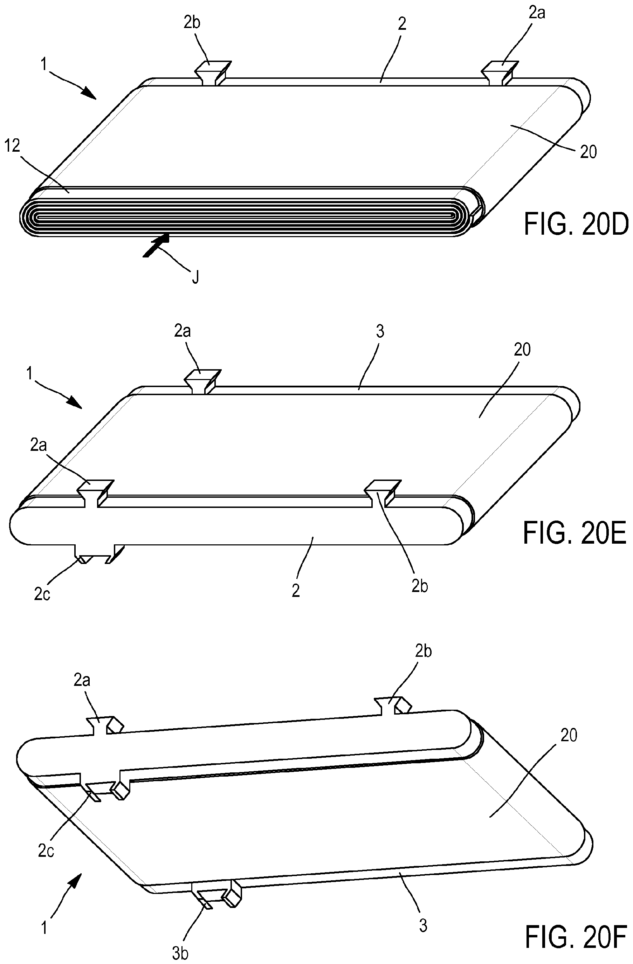

La figure 20D illustre la quatrième étape de la première variante du procédé selon l'invention. Cette quatrième étape est l'étape de remplissage en électrolyte 4 de la cellule 1, symbolisé par la flèche J, avec la quantité nécessaire d'électrolyte 4 pour le bon fonctionnement de la cellule 1.

Pour le remplissage en électrolyte 4, plusieurs méthodes sont possibles. Ainsi, en travaillant en injection sous vide dans le moule, on peut utiliser une méthode par dépression. De même, en travaillant en atmosphère neutre (par exemple avec de l'argon), on peut injecter l'électrolyte 4 sous pression.

Les figures 20E et 20F illustrent, respectivement en vue de dessus et en vue de dessous, la cinquième étape de la première variante du procédé selon l'invention. La cinquième étape, une fois la cellule 1 remplie d'électrolyte 4, consiste à l'injection de la seconde borne sur la cathode, par un procédé PIM similaire à celui de la première borne, pour former l'électrode positive 3 munie par exemple d'un élément mâle d'électrode 3a et d'un élément femelle d'électrode 3b. Cette borne est ainsi injectée à la forme finale souhaitée, comprenant la forme de la connectique. Cette borne est injectée à l'aide d'un mélange de poudre d'aluminium ou de nickel et d'un liant.

Pour éviter la dégradation de l'électrolyte 4, le liant utilisé doit permettre un « déliantage », soit par solvant, soit à basse température (inférieur à 90°C selon l'électrolyte 4), soit par utilisation de solvant en conditions supercritiques. Le frittage utilisé est effectué soit par un procédé sans augmentation de la température (par exemple frittage photonique, alpha, entre autres), soit par un procédé ne provoquant qu'un échauffement local (micro-ondes, procédé SPS pour « Spark Plasma Sintering » en anglais, entre autres). On peut aussi ajouter des matériaux d'alliage dans les matériaux des bornes pour réduire leur température de fusion (par exemple de l'argent, du zinc, du plomb, de l'étain pour le cuivre). Un procédé avec échauffement local peut être complété par un système de refroidissement pour ne pas dégrader l'électrolyte 4. Les caractéristiques mécaniques n'étant pas nécessairement recherchées, on peut aussi utiliser directement les pièces dites « vertes » (pièce sortie d'injection sans « déliantage » ni frittage) ou « brunes » (pièce sortie d'injection avec « déliantage » mais pas de frittage).

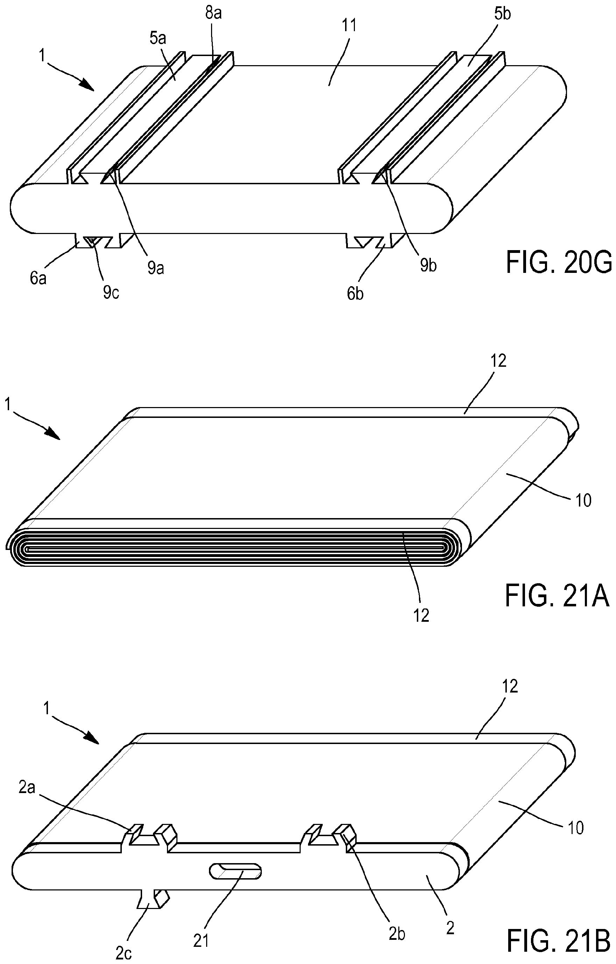

La figure 20G illustre la sixième étape de la première variante du procédé selon l'invention. Cette sixième étape correspond à l'injection du revêtement final 11.

Le revêtement 11 est directement surmoulé sur le coeur électrochimique 10 et les bornes. Il est mis à la forme des éléments mâles 5a, 5b et femelles 6a, 6b, et laisse les ouvertures nécessaires à la connexion dans la partie masquée de ces éléments mâles 5a, 5b et femelles 6a, 6b, pour former des interfaces de connexion électrique de polarité positive 8a et négative 9a, 9b, 9c, par exemple soit par un système de tiroirs, soit à l'aide de noyaux. Ce revêtement 11 peut être réalisé à l'aide de tous les matériaux répondant aux exigences mécaniques, thermiques, électriques, et autres conditions d'utilisation de l'application ciblée. On peut ainsi envisager par exemple une résine thermodurcissable (époxy, vinylique, méthacryliques, silicone, polyuréthane, polyimides, phénoliques, formica, bakélite, polyesters insaturés, entre autres) ou une résine thermoplastique (ABS, HDPE, LDPE, LLDPE, PA, PEEK, PE, PET, PETE, PC, PMMA, POM, PP, PS, PPS, PTFE, PVC, entre autres), chargée en fibres ou renforcée par une matrice tissée ou non tissée, par exemple carbone, aramide, verre, céramiques (nitrure de bore, carbure de silicium, alumine, oxyde de silicium, mullite, nitrure d'aluminium, nitrure de silicium, oxyde de zirconium, zircone), fibres bio-sourcées (lin, chanvre, ortie, bananier, noix de coco, palmier, dattier, bambou), entre autres. Pour modifier les caractéristiques de ce matériau, on peut ajouter des charges ou des additifs.

Dans cette première variante du procédé selon l'invention, toutes les étapes réalisées après le remplissage de l'électrolyte 4 doivent être préférentiellement réalisées à basse température pour éviter toute dégradation de l'électrolyte 4. L'anode étant constituée du métal à plus haute température de fusion, qui nécessite donc une température de frittage plus importante, elle est réalisée en premier. On peut également utiliser des matériaux à basse température de solidification, des méthodes sans émission de température ou à échauffement local.

Les figures 21A à 21H illustrent, en perspective, différentes étapes successives de mise en oeuvre d'une deuxième variante du procédé conforme à l'invention.

Cette deuxième variante du procédé selon l'invention consiste à réaliser les étapes de métallurgie des poudres (PIM) avant le surmoulage du film en matériau isolant 20 de protection chimiquement neutre et du remplissage en électrolyte 4. On peut réaliser cette deuxième variante dans un premier moule dédié aux étapes de l'opération PIM, ce qui permet de réduire la complexité du moule d'injection et d'utiliser des procédés de frittage conventionnels à plus haute température mais moins complexes. Il faut alors laisser un ou plusieurs trous 21 sur une des bornes pour le remplissage de l'électrolyte 4.

Comme pour la première variante du procédé selon l'invention dans le cas de l'utilisation d'un stack, celui-ci est réalisé de façon à avoir les rives 12 dépassant des côtés des bornes positive et négative.

Dans les exemples des figures 21A à 21H, on utilise un coeur électrochimique 10 bobiné.

La figure 21A illustre la première étape de la deuxième variante du procédé selon l'invention. Dans cette première étape, le coeur électrochimique 10 est placé dans un moule. Les rives 12 sont situées de chaque côté du coeur électrochimique 10.

La figure 21B illustre la deuxième étape de la deuxième variante du procédé selon l'invention. Cette deuxième étape consiste à utiliser une méthode PIM pour injecter à l'aide d'un matériau conducteur, une borne autour de la rive 12 de l'anode à la forme finale souhaitée pour former l'électrode négative 2 comportant des éléments femelles d'électrode 2a et 2B et un élément mâle d'électrode 2c. Cette borne est injectée et frittée avec un ou plusieurs trous 21 pour permettre le remplissage de l'électrolyte 4 dans une étape suivante. Selon la chimie de la cellule 1, la borne peut être injectée avec un mélange de cuivre ou d'aluminium avec un liant.

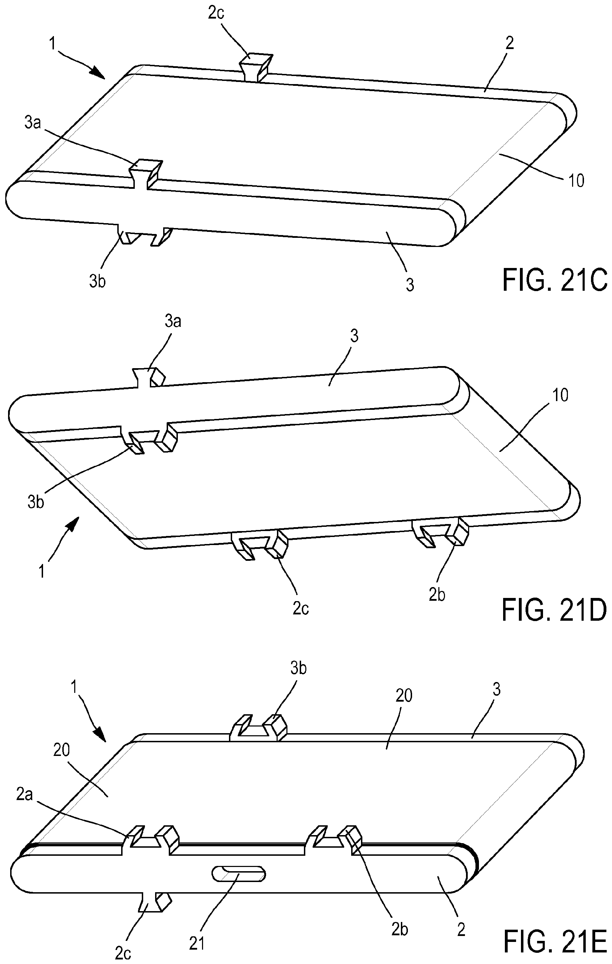

Les figures 21C et 21D illustrent, respectivement en vue de dessus et en vue de dessous, la troisième étape de la deuxième variante du procédé selon l'invention. Cette troisième étape consiste en l'injection de la seconde borne sur la cathode par un même procédé PIM que pour la première. Cette borne, comme la précédente, est injectée à la forme finale souhaitée, comprenant la forme de la connectique, pour former l'électrode positive 3 comportant un élément mâle d'électrode 3a et un élément femelle d'électrode 3b. Cette borne est injectée à l'aide d'un mélange de poudre d'aluminium et d'un liant.

La figure 21E illustre la quatrième étape de la deuxième variante du procédé selon l'invention. Dans cette quatrième étape, on place le coeur électrochimique 10 dans un moule et on surmoule autour de celui-ci un film en un matériau isolant 20, étanche et chimiquement stable vis-à-vis de l'électrolyte 4 tout en laissant les bornes libres de matière.

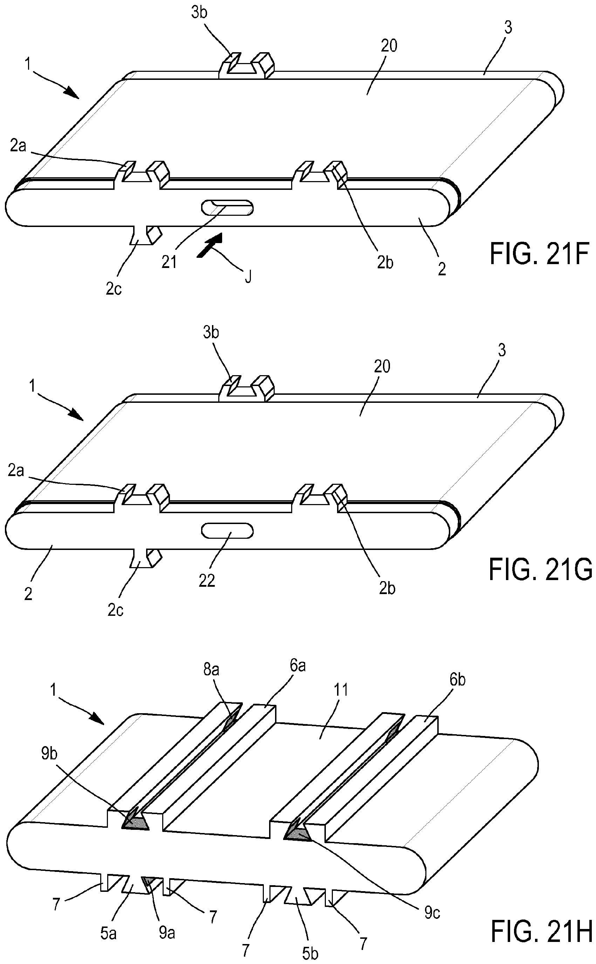

La figure 21F illustre la cinquième étape de la deuxième variante du procédé selon l'invention. Dans cette cinquième étape, on remplit la cellule 1 avec l'électrolyte 4, schématisé par la flèche J, nécessaire à son bon fonctionnement. Pour le remplissage, plusieurs méthodes sont possibles, comme décrit précédemment.

La figure 21G illustre la sixième étape de la deuxième variante du procédé selon l'invention. Dans cette sixième étape, une fois la cellule 1 remplie en électrolyte 4, on injecte un bouchon 22 de matière isolante, étanche et chimiquement stable vis-à-vis de l'électrolyte 4 dans le ou les trous 21 de la borne ayant servi au remplissage.

La figure 21H illustre enfin la septième étape de la deuxième variante du procédé selon l'invention, dans laquelle on injecte le revêtement 11 final comme décrit précédemment.

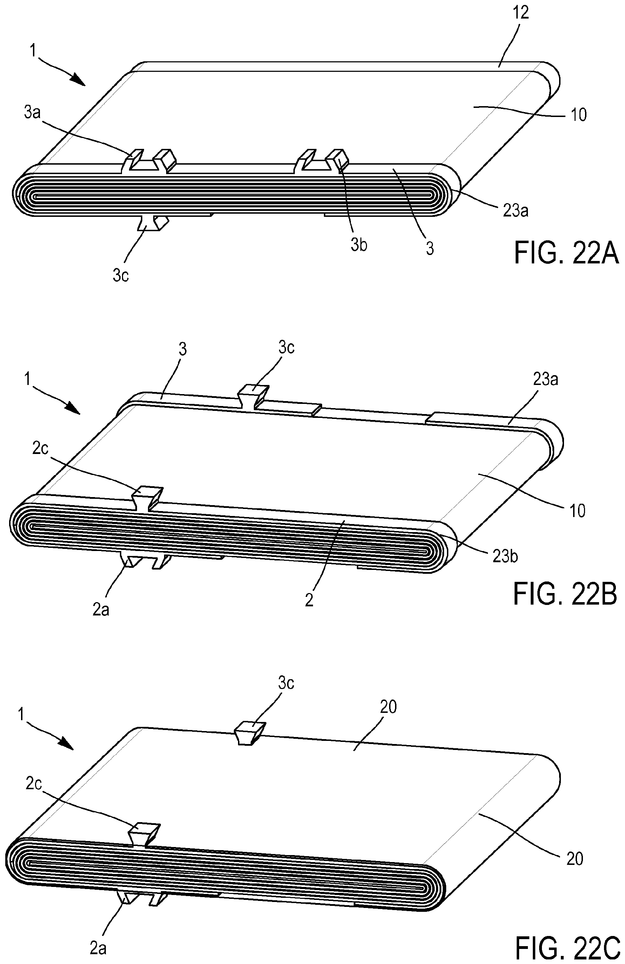

Les figures 22A à 22F illustrent, en perspective, différentes étapes successives de mise en oeuvre d'une troisième variante du procédé conforme à l'invention.

Cette troisième variante du procédé selon l'invention est similaire à la deuxième variante mais ne fait pas intervenir de métallurgie des poudres (PIM). On utilise une languette 23a, 23b, par exemple en aluminium ou en cuivre, par rive 12, sur laquelle on fixe le ou les éléments mâles 2c, 3c ou femelles 2a, 3a, 3b des électrodes positive 3 et négative 2. On peut aussi déformer la languette 23a, 23b à la forme des bornes, i.e. des éléments mâles ou femelles. Chacune des languettes 23a, 23b est ensuite fixée autour de la rive 12 correspondante par déformation et/ou brasage pour augmenter le passage du courant.

Les figures 21A et 22B illustrent successivement la mise en place de la languette 23a pour former l'électrode positive 3, puis la mise en place de la languette 23b pour former l'électrode négative 2 (première et deuxième étapes de la troisième variante).

Par ailleurs, la figure 22C illustre la troisième étape de la troisième variante du procédé selon l'invention. Dans cette troisième étape, on place le coeur électrochimique 10 dans le moule puis on injecte le film en matériau isolant 20, étanche et chimiquement stable vis-à-vis de l'électrolyte 4. Dans cette troisième variante, le film en matériau isolant 20 est surmoulé sur toute la surface du coeur électrochimique 10, sauf sur une extrémité laissée libre d'une rive 12 pour permettre le remplissage en électrolyte 4.

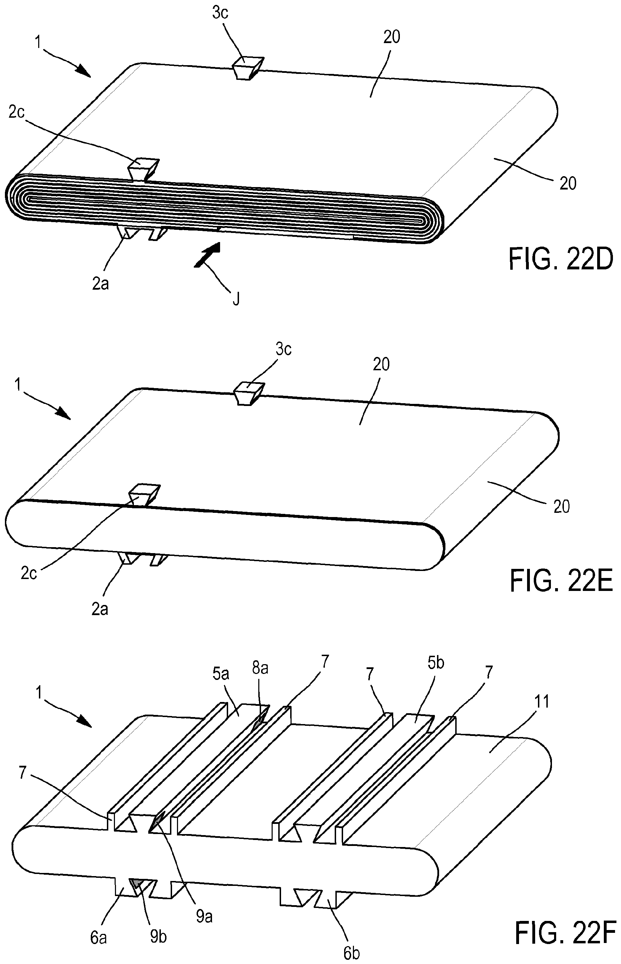

La figure 22D illustre la quatrième étape de la troisième variante du procédé selon l'invention. Dans cette quatrième étape, on remplit d'électrolyte 4 la cellule 1 avec la quantité nécessaire à son bon fonctionnement, schématisé par la flèche J, de la même façon que pour les deux première et deuxième variantes décrites précédemment.

La figure 22E illustre par ailleurs la cinquième étape de la troisième variante du procédé selon l'invention, dans laquelle on réalise une deuxième injection du matériau isolant 20 à l'extrémité de la rive 12 laissée libre pour le remplissage en électrolyte 4 et de sa borne pour sceller l'électrolyte 4 à l'intérieur du coeur électrochimique 10. Dans cette cinquième étape, on veille à laisser les zones de connexion des bornes libres (éléments mâles et femelles) pour pouvoir former les interfaces de connexion électrique positive 8a et négative 9a, 9b.

La figure 22F illustre enfin la dernière étape de la troisième variante du procédé selon l'invention, dans laquelle on injecte le revêtement 11 final sur la cellule 1 à la forme voulue, comme décrit précédemment, pour former les éléments mâles 5a, 5b et femelles 6a, 6b.

Bien entendu, l'invention n'est pas limitée aux exemples de réalisation qui viennent d'être décrits. Diverses modifications peuvent y être apportées par l'homme du métier, dans le cadre des revendications. L'expression « comportant un » doit être comprise comme étant synonyme de « comportant au moins un », sauf si le contraire est spécifié.

## Revendications

1. Cellule de stockage d'énergie électrique (1), notamment une cellule électrochimique élémentaire (1), destinée à être intégrée au sein d'un module électrique d'assemblage d'un système de stockage d'énergie, présentant une première face (1a ; 1c) et une deuxième face (1b ; 1d), opposée à la première face (1a ; 1c), où la cellule (1) comporte, sur l'une de ses première (1a ; 1c) et deuxième (1b ; 1d) faces, au moins un élément mâle (5 ; 5a, 5b, 5c), et sur l'autre de ses première (1a ; 1c) et deuxième (1b ; 1d) faces, au moins un élément femelle (6 ; 6a, 6b, 6c), lesdits au moins un élément mâle (5 ; 5a, 5b, 5c) et au moins un élément femelle (6 ; 6a, 6b, 6c) présentant des formes permettant leur encastrement l'un dans l'autre de façon à ce que la cellule (1) soit configurée pour être assemblée à une autre cellule (1) du même type, ledit au moins un élément mâle (5 ; 5a, 5b, 5c) ou ledit au moins un élément femelle (6; 6a, 6b, 6c) de la cellule (1) étant respectivement encastré avec au moins un élément femelle (6 ; 6a, 6b, 6c) ou au moins un élément mâle (5 ; 5a, 5b, 5c) de l'autre cellule (1) du même type, où au moins un élément mâle (5 ; 5a, 5b, 5c) desdits au moins un élément mâle (5 ; 5a, 5b, 5c) et au moins un élément femelle (6 ; 6a, 6b, 6c) comporte au moins une interface de connexion électrique de polarité positive (8; 8a, 8b, 8c) et qu'au moins un élément femelle (6 ; 6a, 6b, 6c) desdits au moins un élément mâle (5 ; 5a, 5b, 5c) et au moins un élément femelle (6 ; 6a, 6b, 6c) comporte au moins une interface de connexion électrique de polarité négative (9 ; 9a, 9b), ou inversement, de façon à ce que la cellule (1) soit configurée pour être électriquement connectée à une autre cellule (1) du même type, et **caractérisée en ce que** la cellule (1) comporte un coeur électrique (10) comportant une électrode négative (2), une électrode positive (3) et un électrolyte (4) situé entre l'électrode négative (2) et l'électrode positive (3), recouvert par un revêtement (11) configuré de sorte à ne pas recouvrir lesdites au moins une interface de connexion électrique de polarité positive (8 ; 8a, 8b, 8c) et une interface de connexion électrique de polarité négative (9 ; 9a, 9b).

2. Cellule selon la revendication 1, **caractérisée en ce que** ladite au moins une interface de connexion électrique de polarité positive (8 ; 8a, 8b, 8c) et ladite au moins une interface de connexion électrique de polarité négative (9; 9a, 9b) sont respectivement formées sur une partie d'accessibilité réduite ou nulle dudit au moins un élément mâle (5 ; 5a, 5b, 5c) et sur une partie d'accessibilité réduite ou nulle dudit au moins un élément femelle (6; 6a, 6b, 6c), ou inversement, notamment la partie d'accessibilité réduite ou nulle dudit au moins un élément mâle (5; 5a, 5b, 5c) correspondant à une partie destinée à être recouverte par au moins un élément femelle (6; 6a, 6b, 6c) d'une autre cellule (1) du même type lors de l'assemblage par encastrement de la cellule (1) avec l'autre cellule (1) du même type, et la partie d'accessibilité réduite ou nulle dudit au moins un élément femelle (6; 6a, 6b, 6c) correspondant à une partie destinée à être recouverte par au moins un élément mâle (5 ; 5a, 5b, 5c) d'une autre cellule (1) du même type lors de l'assemblage par encastrement de la cellule (1) avec l'autre cellule (1) du même type.

3. Cellule selon la revendication 1 ou 2, **caractérisée en ce que** ledit au moins un élément mâle (5 ; 5a, 5b, 5c) présente une forme de rainure en relief et **en ce que** ledit au moins un élément femelle (6 ; 6a, 6b, 6c) présente une forme de rainure en creux, les formes de rainure en relief et en creux étant complémentaires l'une de l'autre pour permettre l'assemblage de la cellule (1) avec une autre cellule (1) du même type.

4. Cellule selon l'une quelconque des revendications précédentes, **caractérisée en ce que** ledit au moins un élément mâle (5 ; 5a, 5b, 5c) s'étend longitudinalement, i.e. selon la plus grande dimension, sur ladite une des première (1a ; 1c) et deuxième (1b ; 1d) faces de la cellule (1), et **en ce que** ledit au moins un élément femelle (6 ; 6a, 6b, 6c) s'étend longitudinalement, i.e. selon la plus grande dimension, sur ladite autre des première (1a ; 1c) et deuxième (1b ; 1d) faces de la cellule (1).

5. Cellule selon l'une quelconque des revendications 1 à 3, **caractérisée en ce que** ledit au moins un élément mâle (5 ; 5a, 5b, 5c) s'étend transversalement, i.e. selon la plus petite dimension, sur ladite une des première (1a ; 1c) et deuxième (1b ; 1d) faces de la cellule (1), et **en ce que** ledit au moins un élément femelle (6; 6a, 6b, 6c) s'étend transversalement, i.e. selon la plus petite dimension, sur ladite autre des première (1a ; 1c) et deuxième (1b ; 1d) faces de la cellule (1).

6. Cellule selon l'une quelconque des revendications précédentes, **caractérisée en ce que** ledit au moins un élément mâle (5 ; 5a, 5b, 5c) et/ou ledit au moins un élément femelle (6; 6a, 6b, 6c) sont, au moins en partie, formés par le revêtement (11).

7. Cellule selon l'une quelconque des revendications précédentes, **caractérisée en ce que** ladite une des première (1a ; 1c) et deuxième (1b ; 1d) faces de la cellule (1) comporte au moins un élément mâle (5 ; 5a, 5b, 5c) et au moins un élément femelle (6 ; 6a, 6b, 6c), et **en ce que** ladite autre des première (1a ; 1c) et deuxième (1b ; 1d) faces de la cellule (1) comporte également au moins un élément mâle (5 ; 5a, 5b, 5c) et au moins un élément femelle (6 ; 6a, 6b, 6c).

8. Cellule selon l'une quelconque des revendications précédentes, **caractérisée en ce qu'**elle comporte des moyens de maintien en position (14, 15 ; 16, 17) de la cellule (1) avec une autre cellule (1) du même type.

9. Cellule selon la revendication 8, **caractérisée en ce que** les moyens de maintien en position (14, 15) comportent des orifices (14) formés dans lesdits au moins un élément mâle (5; 5a, 5b, 5c) et au moins un élément femelle (6; 6a, 6b, 6c), les orifices (14) dudit au moins un élément mâle (5 ; 5a, 5b, 5c) et les orifices (14) dudit au moins un élément femelle (6 ; 6a, 6b, 6c) de la cellule (1) étant respectivement configurés pour être en vis-à-vis des orifices (14) d'au moins un élément femelle (6; 6a, 6b, 6c) et des orifices (14) d'au moins un élément mâle (5 ; 5a, 5b, 5c) d'une autre cellule (1) du même type, lors de l'assemblage de la cellule (1) avec au moins une autre cellule (1) du même type, et **en ce que** les moyens de maintien en position (14, 15) comportent en outre au moins une tige de maintien en position (15) apte à être insérée dans les orifices (14) desdits au moins un élément mâle (5 ; 5a, 5b, 5c) et au moins un élément femelle (6 ; 6a, 6b, 6c) de la cellule (1).

10. Cellule selon la revendication 8, **caractérisée en ce que** les moyens de maintien en position (16, 17) comportent au moins une rainure de maintien en position (16) formée sur la cellule (1), notamment le revêtement (11) de la cellule (1), configurée de sorte à être superposée à au moins une rainure de maintien en position (16) d'une autre cellule (1) du même type, lors de l'assemblage de la cellule (1) avec au moins une autre cellule (1) du même type, et **en ce que** les moyens de maintien en position (16, 17) comportent en outre une pièce de maintien en position (17) configurée pour s'insérer entre lesdites au moins une rainure de maintien en position (16) de la cellule (1) et de la cellule (1) du même type lors de l'assemblage des cellules (1).

11. Cellule selon l'une quelconque des revendications précédentes, **caractérisée en ce que** la cellule (1) comporte, sur ladite une de ses première (1a ; 1c) et deuxième (1b ; 1d) faces, au moins deux éléments mâles (5; 5a, 5b, 5c) s'étendant sensiblement parallèlement d'un bord à l'autre de ladite une des première (1a ; 1c) et deuxième (1b ; 1d) faces de la cellule (1), et sur ladite autre de ses première (1a ; 1c) et deuxième (1b ; 1d) faces, au moins deux éléments femelles (6; 6a, 6b, 6c) s'étendant sensiblement parallèlement d'un bord à l'autre de ladite autre des première (1a ; 1c) et deuxième (1b ; 1d) faces de la cellule (1), lesdits au moins deux éléments mâles (5 ; 5a, 5b, 5c) étant respectivement superposés auxdits au moins deux éléments femelles (6 ; 6a, 6b, 6c).

12. Cellule selon la revendication 11, **caractérisée en ce que** le coeur électrique (10) est un coeur électrochimique (10), **en ce que** l'une de l'électrode positive (3) et de l'électrode négative (2) comporte un élément mâle d'électrode (3a) s'étendant vers ladite une des première (1a ; 1c) et deuxième (1b ; 1d) faces de la cellule (1) et un élément femelle d'électrode (3b) s'étendant vers ladite autre des première (1a ; 1c) et deuxième (1b ; 1d) faces de la cellule (1), l'élément mâle d'électrode (3a) et l'élément femelle d'électrode (3b) étant superposés l'un à l'autre, et **en ce que** l'autre de l'électrode positive (3) et de l'électrode négative (2) comporte un élément mâle d'électrode (2a) s'étendant vers ladite une des première (1a ; 1c) et deuxième (1b ; 1d) faces de la cellule (1) et deux éléments femelles d'électrode (2b, 2c) s'étendant vers ladite autre des première (1a ; 1c) et deuxième (1b ; 1d) faces de la cellule (1) ou deux éléments mâles d'électrode s'étendant vers ladite une des première (1a ; 1c) et deuxième (1b ; 1d) faces de la cellule (1) et un élément femelle d'électrode s'étendant vers ladite autre des première (1a ; 1c) et deuxième (1b ; 1d) faces de la cellule (1), un élément mâle d'électrode (2a) et un élément femelle d'électrode (2b) étant superposés l'un à l'autre.

13. Cellule selon la revendication 12, **caractérisée en ce que** le coeur électrochimique (10) est recouvert par le revêtement (11) configuré de sorte à ne pas recouvrir les interfaces de connexion électrique de polarité positive (8a, 8b) et les interfaces de connexion électrique de polarité négative (9a, 9b, 9c) des éléments mâles (5a, 5b) et femelles (6a, 6b) de la cellule (1), le revêtement (11) définissant lesdits éléments mâles (5a, 5b) et femelles (6a, 6b) de la cellule (1) et épousant les formes des éléments mâles d'électrode (2a, 3a) et des éléments femelles d'électrode (3b, 2b, 2c).

14. Module électrique d'assemblage d'un système de stockage d'énergie, **caractérisé en ce qu'**il comporte un assemblage de plusieurs cellules (1) selon l'une quelconque des revendications précédentes, et **en ce qu'**il comporte au moins une tige de connexion mâle (13a) apte à s'encastrer dans une pluralité d'éléments femelles (6; 6a, 6b, 6c) des cellules (1), et au moins une tige de connexion femelle (13b) apte à s'encastrer dans une pluralité d'éléments mâles (5 ; 5a, 5b, 5c) des cellules (1), de façon à permettre l'assemblage et la connexion électriques des cellules (1) entre elles au sein du module d'assemblage.

15. Procédé de fabrication d'une cellule de stockage d'énergie électrique (1) selon l'une quelconque des revendications 1 à 13, **caractérisé en ce qu'**il comporte les étapes suivantes :
a) positionner un coeur électrique (10) dans un moule,
b) surmouler autour du coeur électrique (10) un matériau isolant (20),
c) réaliser au moins une électrode positive (3) ou négative (2) sur au moins un bord (12) du coeur électrique (10), ladite au moins une électrode positive (3) ou négative (2) comportant au moins un élément mâle ou femelle d'électrode positive (3a, 3b, 3c) ou négative (2a, 2b, 2c),
d) remplir le coeur électrique (10) avec un électrolyte (4),
e) en cas de réalisation d'une seule électrode positive (3) ou négative (2) dans l'étape c), réaliser l'autre électrode positive (3) ou négative (2) sur l'autre bord (12) du coeur électrique (10), ladite autre électrode positive (3) ou négative (2) comportant au moins un élément mâle ou femelle d'électrode positive (3a, 3b, 3c) ou négative (2a, 2b, 2c),
f) surmouler un revêtement (11) sur le coeur électrique (10) et les deux électrodes positive (3) et négative (2), de sorte à définir lesdits au moins un élément mâle (5a, 5b) et un élément femelle (6a, 6b) de la cellule (1), le revêtement (11) ne recouvrant que partiellement lesdits au moins un élément mâle d'électrode et un élément femelle d'électrode de façon à former lesdites au moins une interface de connexion électrique de polarité négative (9a, 9b, 9c) et au moins une interface de connexion électrique de polarité positive (8a, 8b, 8c).

## Patentansprüche

1. Zelle zum Speichern von elektrischer Energie (1), insbesondere eine elementare elektrochemische Zelle (1), die dazu bestimmt ist, in ein elektrisches Modul zur Montage eines Energiespeichersystems integriert zu werden, aufweisend eine erste Seite (1a; 1c) und eine zweite Seite (1b; 1d), die zur ersten Seite (1a; 1c) entgegengesetzt ist, wobei die Zelle (1) an einer ihrer ersten (1a; 1c) und zweiten (1b; 1d) Seite mindestens ein Steckelement (5; 5a, 5b; 5c) und an der anderen ihrer ersten (1a; 1c) und zweiten (1b; 1d) Seite mindestens ein Aufnahmeelement (6; 6a, 6b, 6c) umfasst, wobei das mindestens eine Steckelement (5; 5a, 5b, 5c) und das mindestens eine Aufnahmeelement (6; 6a, 6b, 6c) Formen aufweisen, die ihr Ineinanderstecken ermöglichen, so dass die Zelle (1) ausgebildet ist, um an einer anderen Zelle (1) desselben Typs montiert zu werden, wobei das mindestens eine Steckelement (5; 5a, 5h, 5c) oder das mindestens eine Aufnahmeelement (6; 6a, 6b, 6c) der Zelle (1) mit mindestens einem Aufnahmeelement (6; 6a, 6b, 6c) bzw. mindestens einem Steckelement (5; 5a, 5b, 5c) der anderen Zelle (1) desselben Typs zusammengesteckt wird, wobei mindestens ein Steckelement (5; 5a, 5b, 5c) des mindestens einen Steckelements (5; 5a, 5b, 5c) und mindestens ein Aufnahmeelement (6; 6a, 6b, 6c) mindestens eine positiv gepolte elektrische Verbindungsschnittstelle (8; 8a, 8b, 8c) und mindestens ein Aufnahmeelement (6; 6a, 6b, 6c) des mindestens einen Steckelements (5; 5a, 5b, 5c) und mindestens ein Aufnahmeelement (6; 6a, 6b, 6c) mindestens eine negativ gepolte elektrische Verbindungsschnittstelle (9; 9a, 9b) umfasst oder umgekehrt, so dass die Zelle (1) ausgebildet ist, um elektrisch mit einer anderen Zelle (1) desselben Typs verbunden zu werden, **dadurch gekennzeichnet, dass** die Zelle (1) einen elektrischen Kern (10) umfasst, der eine negative Elektrode (2), eine positive Elektrode (3) und einen zwischen der negativen Elektrode (2) und der positiven Elektrode (3) befindlichen Elektrolyten (4) umfasst und mit einem Überzug (11) bedeckt ist, der so ausgebildet ist, dass er die mindestens eine positiv gepolte elektrische Verbindungsschnittstelle (8; 8a, 8b, 8c) und eine negativ gepolte elektrische Verbindungsschnittstelle (9; 9a, 9b) nicht bedeckt.

2. Zelle nach Anspruch 1, **dadurch gekennzeichnet, dass** die mindestens eine positiv gepolte elektrische Verbindungsschnittstelle (8; 8a, 8b, 8c) und die mindestens eine negativ gepolte elektrische Verbindungsschnittstelle (9; 9a, 9b) an einem kaum oder nicht zugänglichen Teil des mindestens einen Steckelements (5; 5a, 5b, 5c) bzw. an einem kaum oder nicht zugänglichen Teil des mindestens einen Aufnahmeelements (6; 6a, 6b, 6c) gebildet sind oder umgekehrt, wobei insbesondere der kaum oder nicht zugängliche Teil des mindestens einen Steckelements (5; 5a, 5b, 5c) einem Teil entspricht, der dazu bestimmt ist, beim Verbinden durch Zusammenstecken der Zelle (1) mit der anderen Zelle (1) desselben Typs von mindestens einem Aufnahmeelement (6; 6a, 6b, 6c) einer anderen Zelle (1) desselben Typs bedeckt zu werden, und der kaum oder nicht zugängliche Teil des mindestens einen Aufnahmeteils (6; 6a, 6b, 6c) einem Teil entspricht, der dazu bestimmt ist, beim Verbinden durch Zusammenstecken der Zelle (1) mit der anderen Zelle (1) desselben Typs von mindestens einem Steckelement (5; 5a, 5b, 5c) einer anderen Zelle (1) desselben Typs bedeckt zu werden.

3. Zelle nach Anspruch 1 oder 2, **dadurch gekennzeichnet, dass** das mindestens eine Steckelement (5; 5a, 5b, 5c) die Form einer erhabenen Nut aufweist und dass das mindestens eine Aufnahmeelement (6; 6a, 6b, 6c) die Form einer vertieften Nut aufweist, wobei die Formen der erhabenen und vertieften Nut komplementär zueinander ausgebildet sind, um die Montage der Zelle (1) mit einer anderen Zelle (1) desselben Typs zu ermöglichen.

4. Zelle nach einem der vorhergehenden Ansprüche, **dadurch gekennzeichnet, dass** sich das mindestens eine Steckelement (5; 5a, 5b, 5c) längs, d. h. entlang der größten Abmessung, an der einen der ersten (1a; 1c) und zweiten (1b; 1d) Seite der Zelle (1) erstreckt und dass sich das mindestens eine Aufnahmeelement (6; 6a, 6b, 6c) längs, d. h. entlang der größten Abmessung, an der anderen der ersten (1a; 1c) und zweiten (1b; 1d) Seite der Zelle (1) erstreckt.

5. Zelle nach einem der Ansprüche 1 bis 3, **dadurch gekennzeichnet, dass** sich das mindestens eine Steckelement (5; 5a, 5b, 5c) quer, d. h. entlang der kleinsten Abmessung, an der einen der ersten (1a; 1c) und zweiten (1b; 1d) Seite der Zelle (1) erstreckt und dass sich das mindestens eine Aufnahmeelement (6; 6a, 6b, 6c) quer, d. h. entlang der kleinsten Abmessung, an der anderen der ersten (1a; 1c) und zweiten (1b; 1d) Seite der Zelle (1) erstreckt.

6. Zelle nach einem der vorhergehenden Ansprüche, **dadurch gekennzeichnet, dass** das mindestens eine Steckelement (5; 5a, 5b, 5c) und/oder das mindestens eine Aufnahmeelement (6; 6a, 6b, 6c) mindestens teilweise durch den Überzug (11) gebildet sind.

7. Zelle nach einem der vorhergehenden Ansprüche, **dadurch gekennzeichnet, dass** die eine der ersten (1a; 1c) und zweiten (1b; 1d) Seite der Zelle (1) mindestens ein Steckelement (5; 5a, 5b, 5c) und mindestens ein Aufnahmeelement (6; 6a, 6b, 6c) umfasst und dass die andere der ersten (1a; 1c) und zweiten (1b; 1d) Seite der Zelle (1) ebenfalls mindestens ein Steckelement (5; 5a, 5b, 5c) und mindestens ein Aufnahmeelement (6; 6a, 6b, 6c) umfasst.

8. Zelle nach einem der vorhergehenden Ansprüche, **dadurch gekennzeichnet, dass** sie Arretierungsmittel (14, 15; 16, 17) zum Arretieren der Zelle (1) an einer anderen Zelle (1) desselben Typs umfasst.

9. Zelle nach Anspruch 8, **dadurch gekennzeichnet, dass** die Arretierungsmittel (14, 15) Öffnungen (14) umfassen, die in dem mindestens einem Steckelement (5; 5a, 5b, 5c) und mindestens einem Aufnahmeelement (6; 6a, 6b, 6c) gebildet sind, wobei die Öffnungen (14) des mindestens einen Steckelements (5; 5a, 5b, 5c) und die Öffnungen (14) des mindestens einen Aufnahmeelements (6; 6a, 6b, 6c) der Zelle (1) jeweils dazu ausgebildet sind, um beim Verbinden der Zelle (1) mit mindestens einer anderen Zelle (1) desselben Typs gegenüber den Öffnungen (14) mindestens eines Aufnahmeelements (6; 6a, 6b, 6c) und den Öffnungen (14) mindestens eines Steckelements (5; 5a, 5b, S5) einer anderen Zelle (1) desselben Typs zu liegen, und dass die Arretierungsmittel (14, 15) ferner mindestens einen Arretierungsstift (15) umfassen, der geeignet ist, in die Öffnungen (14) des mindestens einen Steckelements (5; 5a, 5b, 5c) und mindestens einen Aufnahmeelements (6; 6a, 6b, 6c) der Zelle (1) eingeführt zu werden.

10. Zelle nach Anspruch 8, **dadurch gekennzeichnet, dass** die Arretierungsmittel (16, 17) mindestens eine Arretierungsnut (16) umfassen, die an der Zelle (1), insbesondere am Überzug (11) der Zelle (1), gebildet ist, die so ausgebildet ist, dass sie beim Verbinden der Zelle (1) mit mindestens einer anderen Zelle (1) desselben Typs über mindestens einer Arretierungsnut (16) einer anderen Zelle (1) desselben Typs liegt, und dass die Arretierungsmittel (16, 17) ferner ein Arretierungsstück (17) umfassen, das so ausgebildet ist, dass es sich beim Verbinden der Zellen (1) zwischen die mindestens eine Arretierungsnut (16) der Zelle (1) und der Zelle (1) desselben Typs einführen lässt.

11. Zelle nach einem der vorhergehenden Ansprüche, **dadurch gekennzeichnet, dass** die Zelle (1) an der einen ihrer ersten (1a; 1c) und zweiten (1b; 1d) Seite mindestens zwei Steckelemente (5; 5a, 5b, 5c), die sich im Wesentlichen parallel von einer Kante zur anderen der einen der ersten (1a; 1c) und zweiten (1b; 1d) Seite der Zelle (1) erstrecken, und auf der anderen ihrer ersten (1a; 1c) und zweiten (1b; 1d) Seite mindestens zwei Aufnahmeelemente (6; 6a, 6b, 6c), die sich im Wesentlichen parallel von einer Kante zur anderen der ersten (1a; 1c) und zweiten (1b; 1d) Seite der Zelle (1) erstreckt, umfasst, wobei die mindestens zwei Steckelemente (5; 5a, 5b, 5c) jeweils über den mindestens zwei Aufnahmeelementen (6; 6a, 6b, 6c) liegen.

12. Zelle nach Anspruch 11, **dadurch gekennzeichnet, dass** der elektrische Kern (10) ein elektrochemischer Kern (10) ist, dass die eine der positiven Elektrode (3) und der negativen Elektrode (2) ein Elektrodensteckelement (3a), das sich zu der einen der ersten (1a; 1c) und zweiten (1b; 1d) Seite der Zelle (1) hin erstreckt, und ein Elektrodenaufnahmeelement (3b), das sich zu der anderen der ersten (1a; 1c) und zweiten (1b; 1d) Seite der Zelle (1) hin erstreckt, umfasst, wobei das Elektrodensteckelement (3a) und das Elektrodenaufnahmeelement (3b) übereinander liegen, und dass die andere der positiven Elektrode (3) und der negativen Elektrode (2) ein Elektrodensteckelement (2a), das sich zu der einen der ersten (1a; 1c) und zweiten (1b; 1d) Seite der Zelle (1) hin erstreckt, und zwei Elektrodenaufnahmeelemente (2b, 2c), die sich zu der anderen der ersten (1a; 1c) und zweiten (1b; 1d) Seite der Zelle (1) hin erstrecken, oder zwei Elektrodensteckelemente, die sich zu der einen der ersten (1a; 1c) und zweiten (1b; 1d) Seite der Zelle (1) hin erstrecken, und ein Elektrodenaufnahmeelement, das sich zu der anderen der ersten (1a; 1c) und zweiten (1b; 1d) Seite der Zelle (1) hin erstreckt, umfasst, wobei ein Elektrodensteckelement (2a) und ein Elektrodenaufnahmeelement (2b) übereinander liegen.

13. Zelle nach Anspruch 12, **dadurch gekennzeichnet, dass** der elektrochemische Kern (10) von dem Überzug (11) bedeckt ist, der so ausgebildet ist, dass er die positiv gepolten elektrischen Verbindungsschnittstellen (8a, 8b) und die negativ gepolten elektrischen Verbindungsschnittstellen (9a, 9b, 9c) der Steckelemente (5a, 5b) und Aufnahmeelemente (6a, 6b) der Zelle (1) nicht bedeckt, wobei der Überzug (11) die Steckelemente (5a, 5b) und Aufnahmeelemente (6a, 6b) der Zelle (1) definiert und sich eng an die Formen der Elektrodensteckelemente (2a, 3a) und der Elektrodenaufnahmeelemente (3b, 2b, 2c) anlegt.

14. Elektrisches Modul zur Montage eines Systems zum Speichern von Energie, **dadurch gekennzeichnet, dass** es eine Montage mehrerer Zellen (1) nach einem der vorhergehenden Ansprüche umfasst und dass es mindestens einen Steckverbindungsstift (13a), der geeignet ist, in eine Vielzahl von Aufnahmeelementen (6; 6a, 6b, 6c) der Zellen (1) gesteckt zu werden, und mindestens einen Aufnahmeverbindungsstift (13b), der geeignet ist, in eine Vielzahl von Steckelementen (5; 5a, 5b, 5c) der Zellen (1) gesteckt zu werden, umfasst, um die Montage und die elektrische Verbindung der Zellen (1) untereinander in dem Montagemodul zu ermöglichen.

15. Verfahren zur Herstellung einer Zelle zum Speichern von elektrischer Energie (1) nach einem der Ansprüche 1 bis 13, **dadurch gekennzeichnet, dass** es die folgenden Schritte umfasst:
a) Positionieren eines elektrischen Kerns (10) in einer Form,
b) Spritzen eines Isoliermaterials (20) um den elektrischen Kern (10) herum,
c) Ausführen mindestens einer positiven (3) oder negativen (2) Elektrode an mindestens einer Kante (12) des elektrischen Kerns (10), wobei die mindestens eine positive (3) oder negative (2) Elektrode mindestens ein positives (3a, 3b, 3c) oder negatives (2a, 2b, 2c) Elektrodensteckelement oder - aufnahmeelement umfasst,
d) Füllen des elektrischen Kerns (10) mit einem Elektrolyten (4),
e) im Fall der Ausführung einer einzigen positiven (3) oder negativen (2) Elektrode in Schritt c) Ausführen der anderen positiven (3) oder negativen (2) Elektrode an der anderen Kante (12) des elektrischen Kerns (10), wobei die andere positive (3) oder negative (2) Elektrode mindestens ein positives (3a, 3b, 3c) oder negatives (2a, 2b, 2c) Elektrodensteckelement oder -aufnahmeelement umfasst,
f) Spritzen eines Überzugs (11) auf den elektrischen Kern (10) und die beiden positiven (3) und negativen (2) Elektroden, so dass das mindestens eine Steckelement (5a, 5b) und ein Aufnahmeelement (6a, 6b) der Zelle (1) definiert werden, wobei der Überzug (11) das mindestens eine Elektrodensteckelement und ein Elektrodenaufnahmeelement nur teilweise bedeckt, so dass die mindestens eine negativ gepolte elektrische Verbindungsschnittstelle (9a, 9b, 9c) und die mindestens eine positiv gepolte elektrische Verbindungsschnittstelle (8a, 8b, 8c) gebildet werden.

## Claims

1. Cell for storing power (1), in particular an elementary electrochemical cell (1), intended to be integrated into an electrical module for assembling a power storage system, having a first surface (1a; 1c) and a second surface (1b; 1d), opposite the first surface (1a; 1c),
wherein the cell (1) comprises, on one of its first (1a; 1c) and second (1b; 1d) surfaces, at least one male element (5; 5a, 5b, 5c), and on the other of its first (1a; 1c) and second (1b; 1d) surfaces, at least one female element (6; 6a, 6b, 6c), said at least one male element (5; 5a, 5b, 5c) and at least one female element (6; 6a, 6b, 6c) having shapes that allow for their fitting into one another in such a way that the cell (1) is configured to be assembled to another cell (1) of the same type, said at least one male element (5; 5a, 5b, 5c) or said at least one female element (6; 6a, 6b, 6c) of the cell (1) being respectively fitted with at least one female element (6; 6a, 6b, 6c) or at least one male element (5; 5a, 5b, 5c) of the other cell (1) of the same type,
wherein at least one male element (5; 5a, 5b, 5c) of said at least one male element (5; 5a, 5b, 5c) and at least one female element (6; 6a, 6b, 6c) comprises at least one electrical connection interface having positive polarity (8; 8a, 8b, 8c) and that at least one female element (6; 6a, 6b, 6c) of said at least one male element (5; 5a, 5b, 5c) and at least one female element (6; 6a, 6b, 6c) comprises at least one electrical connection interface having negative polarity (9; 9a, 9b), or inversely, in such a way that the cell (1) is configured to be electrically connected to another cell (1) of the same type,
and **characterized by** the fact that the cell (1) comprises an electrical core (10) comprising a negative electrode (2), a positive electrode (3) and an electrolyte (4) located between the negative electrode (2) and the positive electrode (3), covered by a packaging (11) configured in such a way as to not cover said at least one electrical connection interface having positive polarity (8; 8a, 8b, 8c) and an electrical connection interface having negative polarity (9; 9a, 9b).

2. Cell according to claim 1, **characterised in that** said at least one electrical connection interface having positive polarity (8; 8a, 8b, 8c) and said at least one electrical connection interface having negative polarity (9; 9a, 9b) are respectively formed on a portion with reduced or zero accessibility of said at least one male element (5; 5a, 5b, 5c) and on a portion with reduced or zero accessibility of said at least one female element (6; 6a, 6b, 6c), or inversely, in particular the portion with reduced or zero accessibility of said at least one male element (5; 5a, 5b, 5c) corresponding to a portion intended to be covered by at least one female element (6; 6a, 6b, 6c) of another cell (1) of the same type during the assembly by fitting of the cell (1) with the other cell (1) of the same type, and the portion with reduced or zero accessibility of said at least one female element (6; 6a, 6b, 6c) corresponding to a portion intended to be covered by at least one male element (5; 5a, 5b, 5c) of another cell (1) of the same type during the assembly by fitting of the cell (1) with the other cell (1) of the same type.

3. Cell as claimed in claim 1 or 2, **characterised in that** said at least one male element (5; 5a, 5b, 5c) has a shape of a groove in relief and **in that** said at least one female element (6; 6a, 6b, 6c) has a shape of a hollow groove, with the shapes of grooves in relief and with hollows being complementary with one another in order to allow for the assembly of the cell (1) with another cell (1) of the same type.

4. Cell as claimed in any preceding claim, **characterised in that** said at least one male element (5; 5a, 5b, 5c) extends longitudinally, i.e. along the largest dimension, on said one of first (1a; 1c) and second (1b; 1d) surfaces of the cell (1), and **in that** said at least one female element (6; 6a, 6b, 6c) extends longitudinally, i.e. along the largest dimension, over said other of the first (1a; 1c) and second (1b; 1d) surfaces of the cell (1).

5. Cell according to any of claims 1 to 3, **characterised in that** said at least one male element (5; 5a, 5b, 5c) extends transversally, i.e. along the smallest dimension, over said one of first (1a; 1c) and second (1b; 1d) surfaces of the cell (1), and **in that** said at least one female element (6; 6a, 6b, 6c) extends transversally, i.e. along the smallest dimension, over said other of the first (1a; 1c) and second (1b; 1d) surfaces of the cell (1).

6. Cell as claimed in any preceding claim, **characterised in that** said at least one male element (5; 5a, 5b, 5c) and/or said at least one female element (6; 6a, 6b, 6c) are, at least partially, formed by the packaging (11).

7. Cell as claimed in any preceding claim, **characterised in that** said one of the first (1a; 1c) and second (1b; 1d) surfaces of the cell (1) comprises at least one male element (5; 5a, 5b, 5c) and at least one female element (6; 6a, 6b, 6c), and **in that** said other of the first (1a; 1c) and second (1b; 1d) surfaces of the cell (1) comprises also at least one male element (5; 5a, 5b, 5c) and at least one female element (6; 6a, 6b, 6c).

8. Cell as claimed in any preceding claim, **characterised in that** it comprises means for maintaining in position (14, 15; 16, 17) of the cell (1) with another cell (1) of the same type.

9. Cell according to claim 8, **characterised in that** the means for maintaining in position (14, 15) comprise orifices (14) formed in said at least one male element (5; 5a, 5b, 5c) and at least one female element (6; 6a, 6b, 6c), with the orifices (14) of said at least one male element (5; 5a, 5b, 5c) and the orifices (14) of said at least one female element (6; 6a, 6b, 6c) of the cell (1) being respectively configured to be orifices (14) of at least one female element (6; 6a, 6b, 6c) and orifices (14) of at least one male element (5; 5a, 5b, 5c) of another cell (1) of the same type, during the assembly of the cell (1) with at least one other cell (1) of the same type, and **in that** the means for maintaining in position (14, 15) further comprise at least one rod for maintaining in position (15) able to be inserted into the orifices (14) of said at least one male element (5; 5a, 5b, 5c) and at least one female element (6; 6a, 6b, 6c) of the cell (1).

10. Cell according to claim 8, **characterised in that** the means for maintaining in position (16, 17) comprise at least one groove for maintaining in position (16) formed on the cell (1), in particular the packaging (11) of the cell (1), configured in such a way as to be superposed upon at least one groove for maintaining in position (16) of another cell (1) of the same type, during the assembly of the cell (1) with at least one other cell (1) of the same type, and **in that** the means for maintaining in position (16, 17) further comprise a part for maintaining in position (17) configured to be inserted into said at least one groove for maintaining in position (16) of the cell (1) and of the cell (1) of the same type during the assembly of the cells (1).

11. Cell as claimed in any preceding claim, **characterised in that** the cell (1) comprises, on said one of its first (1a; 1c) and second (1b; 1d) surfaces, at least two male elements (5; 5a, 5b, 5c) extending substantially parallel from one edge to the other of said one of first (1a; 1c) and second (1b; 1d) surfaces of the cell (1), and on said other of its first (1a; 1c) and second (1b; 1d) surfaces, at least two female elements (6; 6a, 6b, 6c) extending substantially parallel from one edge to the other of said other of the first (1a; 1c) and second (1b; 1d) surfaces of the cell (1), said at least two male elements (5; 5a, 5b, 5c) being respectively superposed upon said at least two female elements (6; 6a, 6b, 6c).

12. Cell according to claim 11, **characterised in that** the electrical core (10) is an electrochemical core (10), **in that** one of the positive electrode (3) and of the negative electrode (2) comprises a male electrode element (3a) extending to said one of first (1a; 1c) and second (1b; 1d) surfaces of the cell (1) and a female electrode element (3b) extending to said other of the first (1a; 1c) and second (1b; 1d) surfaces of the cell (1), the male electrode element (3a) and the female electrode element (3b) being superposed each upon the other, and **in that** the other of the positive electrode (3) and of the negative electrode (2) comprises a male electrode element (2a) extending to said one of first (1a; 1c) and second (1b; 1d) surfaces of the cell (1) and two female electrode elements (2b, 2c) extending to said other of the first (1a; 1c) and second (1b; 1d) surfaces of the cell (1) or two male electrode elements extending to said one of first (1a; 1c) and second (1b; 1d) surfaces of the cell (1) and a female electrode element extending to said other of the first (1a; 1c) and second (1b; 1d) surfaces of the cell (1), a male electrode element (2a) and a female electrode element (2b) being superposed each upon the other.

13. Cell according to claim 12, **characterised in that** the electrochemical core (10) is covered by the packaging (11) configured in such a way as to not cover the electrical connection interfaces having positive polarity (8a, 8b) and the electrical connection interfaces having negative polarity (9a, 9b, 9c) of the male (5a, 5b) and female (6a, 6b) elements of the cell (1), with the packaging (11) defining said male (5a, 5b) and female (6a, 6b) elements of the cell (1) and hugging the shapes of the male electrode elements (2a, 3a) and of the female electrode elements (3b, 2b, 2c).

14. Electrical module for assembling a power storage system, **characterised in that** it comprises an assembly of several cells (1) according to any preceding claim and **in that** it comprises at least one male connecting rod (13a) able to be fitted into a plurality of female elements (6; 6a, 6b, 6c) of the cells (1), and at least one female connecting rod (13b) able to be fitted into a plurality of male elements (5; 5a, 5b, 5c) of the cells (1), in such a way as to allow for the assembly and the electrical connections of the cells (1) together in the module for assembly.

15. Method for manufacturing a cell for storing power (1) according to any of claims 1 to 13, **characterised in that** it comprises the following steps:
a) positioning an electrical core (10) in a mould,
b) overmoulding around the electrical core (10) an insulating material (20),
c) carrying out at least one positive (3) or negative (2) electrode on at least one edge (12) of the electrical core (10), said at least one positive (3) or negative (2) electrode comprising at least one positive (3a, 3b, 3c) or negative (2a, 2b, 2c) male or female electrode element,
d) filling the electrical core (10) with an electrolyte (4),
e) in the case of a carrying out of a single positive (3) or negative (2) electrode in the step c), carrying out the other positive (3) or negative (2) electrode on the other edge (12) of the electrical core (10), said other positive (3) or negative (2) electrode comprising at least one positive (3a, 3b, 3c) or negative (2a, 2b, 2c) male or female electrode element,
f) overmoulding a packaging (11) on the electrical core (10) and the two positive (3) and negative (2) electrodes, in such a way as to define said at least one male element (5a, 5b) and a female element (6a, 6b) of the cell (1), the packaging (11) only partially covering said at least one male electrode element and a female electrode element in such a way as to form said at least one electrical connection interface having negative polarity (9a, 9b, 9c) and at least one electrical connection interface having positive polarity (8a, 8b, 8c).
